# EUROPÄISCHE PATENTANMELDUNG

(11) **EP 4 821 339 A1**
(43) Veröffentlichungstag der Anmeldung: **14.10.2026**
(21) Anmeldenummer: 26169999.5
(22) Anmeldetag: 31.03.2026
(51) Int. Cl.: A01D 34/00

(54) **VERFAHREN UND RASENMÄHSYSTEM**

(30) Priorität: 07.04.2025 DE 102025113648
(71) Anmelder: AL-KO Geräte GmbH, 89359 Kötz (DE)
(72) Erfinder: Volk, Martin, 89291 Holzheim (DE); Stricker, Herbert, 89364 Rettenbach (DE); Kränzle, Bernhard, 89423 Gundelfingen (DE)
(74) Vertreter: ERNICKE Patent- und Rechtsanwälte PartmbB

(57) **Zusammenfassung**

Die Erfindung betrifft ein Rasenmähsystem und ein Bahnplanungsverfahren für die Planung von zumindest einer Mähbahn (12,13,14) eines automatischen, selbstfahrenden und selbstlenkenden sowie ggf. selbstnavigierenden Rasenmähgeräts (2), insbesondere eines Mähroboters, die bei einem Rasenmähprozess, insbesondere Mähprozess, abzufahren ist, wobei die Mähbahn (12,13,14) innerhalb einer begrenzten Rasenmähfläche (3,4,5) verläuft, wobei das Bahnplanungsverfahren als ein computerimplementiertes Verfahren ausführbar ist oder ausgeführt wird und die folgenden Schritte umfasst:
- Erfassen von bevorzugt umlaufenden Begrenzungskonturlinien (6,7) der Rasenmähfläche (3,4,5),
- Erfassen einer Arbeitsbreite (A) des Rasenmähgeräts (2) und Definieren der Mähbahnbreite (B) anhand der Arbeitsbreite (A),
- Festlegen wenigstens einer die Rasenmähfläche (3,4,5) abdeckenden ersten Mähbahn (12) umfassend mehrere längliche Bahnschleifen (15,16), die unter Bildung einer exzentrischen, fortschreitenden Spiralbahn (17) jeweils aneinander anschließen, wobei die Bahnschleifen (15,16) jeweils umfassen,
- zwei parallele, lineare Schleifenstrecken (18,19), die sich zwischen einander gegenüberliegenden Konturlinienabschnitten (8,8a) erstrecken
- und an den Enden der Schleifenstrecken (18,19) jeweils eine quer zu den Schleifenstrecken (18,19) verlaufende und rundgebogene Wendestrecke (20,21), wobei die parallelen Schleifenstrecken (18,19) der Bahnschleifen (15,16) jeweils einen Querabstand (a) voneinander aufweisen, der dem mehrfachen, insbesondere dreifachen oder vierfachen, der Mähbahnbreite (B) entspricht.

## Beschreibung

Die Erfindung betrifft Verfahren und ein Rasenmähsystem mit den Merkmalen in den selbstständigen Ansprüchen.

Aus der Praxis ist es bekannt, Rasenflächen mit einem Mähroboter chaotisch zu mähen. Ferner ist es praxisbekannt, den Mähroboter auf einer mäanderförmigen Bahn mit parallelen und unmittelbar benachbarten geraden Strecken auf Hinweg und Rückweg fahren zu lassen, wobei der Mähroboter am Ende der geraden Strecken jeweils mit einem engen Radius wendet.

Es ist Aufgabe der vorliegenden Erfindung, eine verbesserte und effizientere Rasenmähtechnik aufzuzeigen.

Die Erfindung löst diese Aufgabe mit den Merkmalen in den selbstständigen Ansprüchen.

Die beanspruchte Rasenmähtechnik, d.h. ein Bahnplanungsverfahren, ein Steuerungsverfahren, ein Rasenmähverfahren, ein Rasenmähsystem, ein automatisches, selbstfahrendes und selbstlenkendes sowie ggf. selbstnavigierendes Rasenmähgerät und ein Softwareprodukt haben verschiedene Vorteile. Das Rasenmähgerät ist bevorzugt fahrerlos und autonom.

Zum einen wird die Mäheffizienz gesteigert, in dem die ein oder mehreren Rasenmähflächen und/oder ein Rasenmähareal vollständig gemäht, werden. Das automatische Rasenmähgerät kann sich durchgängig in einer Fahrtrichtung, insbesondere in Vorwärtsfahrt, entlang von zumindest einer geplanten Mähbahn bewegen. Ineffiziente Rückwärtsfahrten, Wendemanöver auf der Stelle oder Stillstände können entfallen oder können zumindest signifikant reduziert werden. Ein Rasenmähwerkzeug des automatischen Rasenmähgeräts kann während der gesamten Fahrt entlang der ein oder mehreren Mähbahnen in Funktion und angeschaltet bleiben. Ferner können die ein oder mehreren Rasenmähflächen geschont werden, wobei insbesondere schädliche Radspuren vermieden werden können. Zudem kann durch eine effiziente Bahnplanung die Zahl von Mehrfachfahrten auf gleichen Bereichen der Rasenmähfläche reduziert werden.

Günstig ist außerdem die Energieeffizienz. Durch eine optimierte Bahnplanung kann Energie gespart werden. Die vorhandene Energiespeicherkapazität, insbesondere elektrische Batteriekapazität, des automatischen Rasenmähgeräts kann für die gesamte(n) Rasenmähfläche(n) ausreichen oder es können zumindest Nachladevorgänge minimiert werden. Insgesamt bietet die beanspruchte Rasenmähtechnik auch eine hohe Effizienz hinsichtlich des Zeitbedarfs und der Qualität der Rasenmähung. Insbesondere kann mit der Rasenmähung ein sehr gleichmäßiges und optimiertes Erscheinungsbild des bearbeiteten Rasens erzielt werden.

Das automatische Rasenmähgerät kann ein selbstfahrendes und selbstlenkendes Rasenmähgerät sein, welches z.B. als Mähroboter ausgebildet ist. Das Rasenmähgerät kann ggf. auch selbst navigieren. Es kann z.B. Hindernissen, insbesondere temporären oder unvorhergesehenen Hindernissen, gezielt ausweichen und kann danach wieder den geplanten Mähprozess fortzusetzen. Das automatische Rasenmähgerät kann sich entlang ein oder mehrerer geplanter Mähbahnen bewegen. Es kann dabei mit geeigneten Mitteln die Einhaltung der geplanten und vorgegebenen Mähbahn(en) überprüfen und sicherstellen.

Die beanspruchte Rasenmähtechnik umfasst ein Bahnplanungsverfahren für die Planung von zumindest einer Mähbahn des besagten automatischen Rasenmähgeräts, die bei einem Rasenmähprozess abzufahren ist. Die geplante Mähbahn verläuft innerhalb einer begrenzten Rasenmähfläche. Das Bahnplanungsverfahren kann als ein computerimplementiertes Verfahren ausführbar sein oder ausgeführt werden und kann die nachstehend genannten Schritte umfassen. Zum einen können bevorzugt umlaufende Begrenzungskonturlinien der Rasenmähfläche sowie eine Arbeitsbreite (A) des Rasenmähgeräts erfasst werden, wobei anhand der Arbeitsbreite (A) die Mähbahnbreite (B) definiert wird. Die Mähbahnbreite (B) kann z.B. in gleicher Größe oder kleiner als die Arbeitsbreite (A) definiert werden.

Bei dem Bahnplanungsverfahren kann wenigstens eine erste Mähbahn festgelegt werden, welche die Rasenmähfläche abdeckt und mehrere längliche Bahnschleifen umfasst, die unter Bildung einer exzentrischen, fortschreitenden Spiralbahn jeweils aneinander anschließen. Bei der anspruchsgemäßen exzentrischen, fortschreitenden Spiralbahn können mehrere oder alle länglichen Bahnschleifen gleiche Formen und Abmessungen haben. Es kann aber auch Abweichungen geben, z.B. je nach Geometrie der Rasenmähfläche.

Die Bahnschleifen und ihre Mittelpunkte der beanspruchten Spiralbahn reihen sich hintereinander in einer bevorzugt linearen Richtung des Spiralbahnfortschritts. Durch die Exzentrizität und den Fortschritt unterscheidet sich diese Spiralbahnform von einer konzentrischen Spiralbahn, in der die Bahnschleifen jeweils ineinander verlaufen und sich vom Außenrand ausgehend nach innen zum gemeinsamen Mittelpunkt hin zunehmend verengen.

Die mit dem Bahnplanungsverfahren geplanten länglichen Bahnschleifen können sich zwischen einander gegenüberliegenden Konturlinienabschnitten der Rasenmähfläche erstrecken. Die Fortschrittsrichtung der Spiralbahn kann entlang eines Konturlinienabschnitts gerichtet sein. Zumindest einige Bahnschleifen einer Mähbahn können jeweils eine ringartige Schleifenform haben, wobei die rundgebogenen Wendestrecken der Bahnschleife gegeneinander gerichtet sind.

Die länglichen Bahnschleifen können jeweils zwei parallele, lineare Schleifenstrecken umfassen, die sich zwischen den besagten einander gegenüberliegenden Konturlinienabschnitten der Rasenmähfläche erstrecken. Die besagten Bahnschleifen können ferner an den Enden der Schleifenstrecken jeweils eine quer zu den Schleifenstrecken verlaufende und rundgebogene Wendestrecke umfassen. Ferner können die parallelen Schleifenstrecken der Bahnschleifen jeweils einen Querabstand (a) voneinander aufweisen, der dem mehrfachen, insbesondere dreifachen oder vierfachen, der Mähbahnbreite (B) entspricht.

Der Querabstand (a) kann auf die jeweiligen Bahnmitten der linearen Schleifenstrecken bezogen sein. Die Bahnschleifen können gleiche Querabstände (a) haben. Durch den Querabstand (a) können die rundgebogenen Wendestrecken eine entsprechende Länge sowie weiche und relativ große Biegeradien haben, die vom automatischen Rasenmähgerät rasenschonend durchfahren werden können. Die rundgebogenen Wendestrecken einer Bahnschleife können gegeneinander gerichtet sein. Sie können auch eine unterschiedliche Weite (W1,W2) haben. Die Weite (W1,W2) meint den seitlichen Abstand zwischen den beiden Enden einer rundgebogenen Wendestrecke.

Die Weite (W2) der zweiten rundgebogenen Wendestrecke kann z.B. um eine Mähbahnbreite (B) kleiner als die Weite (W1) der ersten rundgebogenen Wendestrecke sein. Dies hat den Vorteil, dass die beiden ersten linearen Schleifenstrecken der ersten Bahnschleife und der anschließenden zweiten Bahnschleife direkt nebeneinander liegen können. Ihre einander zugewandten Mähränder (R) können seitlich dicht aneinander stoßen. Sie können auch seitlich überlappen. Hierfür kann z.B. die Arbeitsbreite (A) größer als die Mähbahnbreite (B) sein.

Bei der Verfolgung einer geplanten Bahnschleife kann sich das automatische Rasenmähgerät zunächst auf einem Hinweg entlang einer ersten linearen Schleifenstrecke bis zu deren Ende und dann entlang der dort anschließenden ersten rundgebogenen Wendestrecke weiter bis zu der seitlich beabstandeten parallelen zweiten linearen Schleifenstrecke bewegen, die dann auf einem Rückweg durchfahren wird bis zu der an ihrem Streckenende anschließenden zweiten und kürzeren rundgebogenen Wendestrecke. An deren Ende schließt in der exzentrischen Spiralbahn dann die nächstfolgende Bahnschleife mit ihrer ersten linearen Schleifenstrecke an. An die zweite rundgebogene Wendestrecke der zweiten Bahnschleife schließt dann die nächstfolgende dritte Bahnschleife an und so fort.

Die gemäß Anspruch 1 geplante zumindest eine Mähbahn kann für die Bearbeitung einer Rasenmähfläche ausreichen. Dies gilt insbesondere, wenn die länglichen Bahnschleifen jeweils bis nahe zu den zugeordneten, einander gegenüberliegenden Konturlinienabschnitten, insbesondere bis in einen dortigen Konturenrandbereich, reichen. Dieser Konturenrandbereich kann z.B. die Breite von einer Mähbahnbreite (B) haben.

Die rundgebogenen Wendestrecken können auf oder nahe an den betreffenden Konturlinienabschnitten, insbesondere in den Konturenrandbereichen, verlaufen. Zudem können die rundgebogenen Wendestrecken benachbarter Bahnschleifen der Spiralbahn einander überschneiden. Dadurch können die Rasenbereiche zwischen den Enden der linearen Schleifenstrecken und dem jeweiligen benachbarten Konturlinienabschnitt effizient bearbeitet werden.

Die rundgebogenen Wendestrecken können jeweils eine Kreisbogenform oder eine Ellipsenbogenform oder eine bereichsweise gerade Form mit rundgebogenen Übergängen zu den Enden der anschließenden linearen Schleifenstrecken aufweisen. Daneben sind andere gerundete Streckenformen möglich. Eine kreisbogenförmige Wendestrecke kann einen Radius haben, dessen Länge der Hälfte des Querabstands (a) entspricht.

Die Form und Anordnung der aneinander anschließenden Bahnschleifen hat den Vorteil einer besonders effizienten und vollständigen Rasenmähung im jeweiligen Bahnschleifenbereich. Die linearen Schleifenstrecken von benachbarten Bahnschleifen können mit ihren Mähbahnrändern seitlich dicht aneinander stoßen. Sie können auch einander seitlich überlappen. Hierdurch kann ein vollständiges Mähen des Rasens im linearen Schleifenstreckenbereich sichergestellt werden. Zudem wird auch im Bereich der einander gegenüberliegenden Konturlinienabschnitte, insbesondere im besagten Konturenrandbereich, eine vollständige Rasenmähung ermöglicht. Hier können sich die Mähbahnbreiten an den rundgebogenen Wendestrecken einander überlappen.

Die linearen Schleifenstrecken von länglichen Bahnschleifen einer geplanten Mähbahn können jeweils durchgehend linear oder zumindest bereichsweise linear verlaufen. Ausnahmen hiervon sind möglich, z.B. bei einer Umfahrung von erfassten Hindernissen. Dies können bekannte oder temporäre bzw. unvorhergesehene Hindernisse sein. Im Hindernisbereich kann von der linearen Form der Schleifenstrecke abgewichen werden, wobei die lineare Form möglichst nach Umfahrung des Hindernisses wieder eingenommen wird.

Die Bahnschleifen einer geplanten Mähbahn können jeweils in eine oder mehrere Bahnschleifengruppen gegliedert sein. Diese können nebeneinander in der Spiralbahn angeordnet sein. Gruppenübergreifend können die länglichen Bahnschleifen, insbesondere ihre linearen Schleifenstrecken, parallel zueinander ausgerichtet sein. Die Bahnschleifengruppen können eng aneinander anschließen. Am Übergang von einer Bahnschleifengruppe zur nächsten Bahnschleifengruppe können ihre hier benachbarten linearen Schleifenstrecken mit ihren zugekehrten Mähbahnrändern seitlich dicht aneinander stoßen. Sie können auch einander seitlich überlappen.

Innerhalb einer Bahnschleifengruppe können die Bahnschleifen jeweils den gleichen Schleifendrehsinn haben. Der Schleifendrehsinn meint die Biegerichtung, mit der eine rundgebogenen Wendestrecke jeweils an das Ende einer linearen Schleifenstrecke einer Bahnschleife anschließt. Die Bahnschleifen können rechtsdrehend oder linksdrehend sein.

Es ist außerdem möglich, dass die Bahnschleifen von benachbarten Bahnschleifengruppen einer Mähbahn jeweils einen unterschiedlichen Schleifendrehsinn haben. Der Schleifendrehsinn kann beim Übergang von einer Bahnschleifengruppe zur anschließenden nächsten Bahnschleifengruppe der Mähbahn jeweils wechseln. Die Wendestrecken an den Enden der linearen Schleifenstrecke am Übergang sind dazu in entgegengesetzten Richtungen gebogen. Sie sind auch abweichend von der ringartigen Schleifenform voneinander weg gerichtet.

Die Gruppenbildung und der Drehsinnwechsel können verschiedene Vorteile haben. Die Zahl von Bahnschleifen kann innerhalb einer Bahnschleifengruppe klein gehalten werden. Sie kann z.B. drei, vier oder fünf Bahnschleifen umfassen. Die Größe der Querabstände (a) kann entsprechend begrenzt werden. Dies hat einerseits den Vorteil, dass die linearen Schleifenstrecken und die Wendestrecken bei der Fahrt des automatischen Rasenmähgeräts besser und genauer eingehalten werden können. Zudem können die Zahl der einander überschneidenden rundgebogenen Wendestrecken und auch Mehrfachfahrten des automatischen Rasenmähgeräts über bereits bearbeitete Rasenbereiche klein gehalten werden.

Die Bildung von Bahnschleifengruppen erleichtert und verbessert außerdem die Anpassung an variierende Geometrien von Rasenmähflächen. Insbesondere können die länglichen Bahnschleifen von einer Bahnschleifengruppe eine andere Länge als die länglichen Bahnschleifen einer benachbarten Bahnschleifengruppe haben. Die Bahnschleifenlänge bezieht sich auf die Erstreckungsrichtung der linearen Schleifenstrecken. Durch die Längenunterschiede kann auf variierende Abstände der einander gegenüberliegenden Konturlinienabschnitte reagiert werden. Innerhalb einer Bahnschleifengruppen können die länglichen Bahnschleifen gleiche oder unterschiedliche Längen haben. Variierende Bahnschleifenlängen können vorteilhaft sein für eine besondere Einpassung in eine Geometrie einer Rasenmähfläche, z.B. für eine schräge Anordnung von Bahnschleifen in einem Eckbereich einer Rasenmähfläche. Die lineare Fortschrittsrichtung kann auf der Winkelhalbierenden des Eckwinkels liegen.

Die Rasenmähfläche(n) und Begrenzungskonturlinie(n) können verschiedene Geometrien aufweisen. Bevorzugt wird eine im Wesentlichen rechteckige Form oder Trapezform. Die Konturlinienabschnitte können eine gerade Erstreckung haben. Sie können auch eine oder mehrere gebogene Bereiche aufweisen. Die Trapezform kann mehr als vier Ecken aufweisen, wobei z.B. eine schräge Seite abgewinkelt sein kann. Die Geometrien können für die Bahnplanung definiert werden. Sie können in eine vorhandene Rasenflächengeometrie besonders gut eingepasst werden.

Die einander gegenüberliegenden Konturlinienabschnitte, zwischen denen die länglichen Bahnschleifen und ihre linearen Streckenabschnitte sich erstrecken, können mit gegenseitigem Abstand parallel oder schräg zueinander verlaufen. Die linearen Schleifenstrecken von Bahnschleifen einer Mähbahn können jeweils entlang, insbesondere parallel, zu anderen Konturlinienabschnitten der Begrenzungskonturlinie ausgerichtet werden. Diese anderen Konturlinienabschnitte können die der Mähbahn zugeordneten, einander gegenüberliegenden Konturlinienabschnitte verbinden, z.B. bei der bevorzugt Rechteck- oder Trapezform. Eine solche Ausführung hat besondere Vorteile für eine vollständige Abdeckung der Rasenmähfläche mit der geplanten zumindest einen Mähbahn und für eine vollflächige Rasenbearbeitung.

Die besagten, einander gegenüberliegenden Konturlinienabschnitte können aber auch über Eck verlaufen und einander schneiden. Die länglichen Bahnschleifen können dabei in der vorerwähnten Schräglage in die Rasenmähfläche, insbesondere in deren Eckbereich(e) eingepasst werden. Im mittleren Bereich der Rasenmähfläche können die linearen Schleifenstrecken der schrägen Bahnschleifen eine besonders große Länge haben.

Die schräge Bahnschleifenanordnung kann auch zu einer Reduzierung der Zahl von Bahnschleifen und von Bahnschleifengruppen sowie von rundgebogenen Wendestrecken und zu einer Effizienzsteigerung beitragen. Dies kann insbesondere bei einer trapezförmigen Rasenmähfläche von Vorteil sein. Bei einer Trapezform können sich auch die linearen Schleifenstrecken der schrägen Bahnschleifen parallel zu einem schrägen Konturlinienabschnitt des Trapezes erstrecken.

Beim Bahnplanungsverfahren kann eine zweite Mähbahn des automatischen Rasenmähgeräts mit länglichen Bahnschleifen festgelegt werden, wobei sich die länglichen Bahnschleifen quer zu den Bahnschleifen der ersten Mähbahn erstrecken. Die Bahnschleifen und die Spiralbahnen der ersten und zweiten Mähbahn kreuzen einander. Die besagte Querausrichtung kann eine senkrechte und auch eine schräge gegenseitige Ausrichtung der kreuzenden Bandschleifen umfassen. Günstig ist in vielen Fällen, insbesondere bei im Wesentlichen rechteckigen und/oder trapezförmigen Begrenzungskonturlinien, eine senkrechte Kreuzung bzw. ein Winkel zwischen den besagten Bahnschleifen von 90°. Der Kreuzungswinkel kann auch kleiner sein. Die Bahnschleifen und die Spiralbahn der zweiten Mähbahn können ansonsten analog zu den vorbeschriebenen Ausbildungen der Bahnschleifen und Spiralbahn der ersten Mähbahn gestaltet sein.

Das beanspruchte Bahnplanungsverfahren kann die Festlegung einer weiteren bevorzugt ringförmigen, insbesondere geschlossenen, Mähbahn umfassen. Diese weitere Mähbahn kann sich entlang der bevorzugt umlaufenden Begrenzungskonturlinie(n) der Rasenmähfläche erstrecken. Auf dieser weiteren Mähbahn können evtl. freie Rasenbereiche zwischen den rundgebogenen Wendestrecken bearbeitet werden. Die weitere Mähbahn kann eine Randmähbahn sein.

Die Bahnplanung kann verschiedene Kombinationen dieser ersten, zweiten und weiteren Mähbahn umfassen. Eine erste Mähbahn mit der Spiralbahn kann z.B. nur mit einer ringförmigen weiteren Mähbahn oder nur mit einer zweiten spiralbahnförmigen Mähbahn oder auch mit beiden der zweiten und ringförmigen Mähbahn kombiniert werden. Bei diesen Kombinationen können die erste und die zweite und/oder weitere Mähbahn miteinander verbunden werden. Sie können bei einer Kombination in wählbarer Reihenfolge aneinander anschließen. Die erste und die zweite und/oder weitere Mähbahn können von dem automatischen Rasenmähgerät auch in wählbarer Reihenfolge nacheinander durchfahren werden.

Bei dem Bahnplanungsverfahren kann ein Rasenmähareal mehrere der vorggenannten Rasenmähflächen aufweisen. Es kann insbesondere in mehrere Rasenmähflächen virtuell unterteilt werden. Dabei kann die zumindest eine Mähbahn in den Rasenmähflächen jeweils mit zumindest einer Mähbahn in der jeweils nächsten Rasenmähfläche durch eine Übergangsstrecke verbunden werden. Dies hat den Vorteil, dass ein Rasenmähareal eine hohe Flächengröße haben kann, die optimal bearbeitet werden kann. Das Rasenmähareal kann auch selbst und ohne die vorgenannte Unterteilung eine Rasenmähfläche gemäß Anspruch 1 darstellen, die von der geplanten zumindest einen Mähbahn abgedeckt wird.

Die Rasenmähfläche(n) und/oder das Rasenmähareal sowie die bevorzugt virtuelle Unterteilung eines Rasenmähareal in mehrere Rasenmähflächen können beim Bahnplanungsverfahren definiert werden. Dies kann die Bahnplanung und die dichte Aneinanderreihung von Mähbahnen und deren Bahnschleifen erleichtern. Dadurch können einerseits der Planungsaufwand reduziert und andererseits die Flächenabdeckung und die vollflächige Bearbeitung des Rasenmähareals optimiert werden.

Die Rasenmähfläche(n) und/oder das Rasenmähareal können innerhalb einer natürlichen vorhandenen Rasenfläche beim Bahnplanungsverfahren definiert werden. Sie können dabei in die natürliche vorhandene Rasenfläche bestmöglich eingepasst und hier angeordnet werden. Dies hat den Vorteil, dass die natürliche vorhandene Rasenfläche weitestgehend vollflächig mit der beanspruchten Rasenmähtechnik strukturiert und optimiert gemäht werden kann. Die bevorzugte Rechteck- und/oder Trapezform der Rasenmähfläche(n) und/oder des Rasenmähareal sind für die Einpassung in eine vorhandene natürliche Rasenflächengeometrie günstig, wobei auch eine bevorzugt virtuelle Unterteilung in mehrere Rasenmähflächen Vorteile bringt.

Falls in der natürlichen vorhandenen Rasenfläche etwaige Rasenbereiche außerhalb von der/den definierten Rasenmähfläche(n) und/oder dem Rasenmähareal vorhanden sein sollten, können diese in anderer Weise bearbeitet werden, z.B. durch Mähfahrten des automatischen Rasenmähgeräts entlang der Ränder der natürlichen vorhandenen Rasenfläche.

Bei einem Rasenmähareal kann zumindest eine Begrenzungskonturlinie vorhanden sein, die über den Arealrand umlaufen kann und die eine bevorzugt geschlossene Ringform haben kann. Eine besagte weitere Mähbahn kann sich am Konturenrandbereich des Rasenmähareals befinden. Dies kann eine Randmähbahn entlang der Arealkontur sein. Die weitere Mähbahn des Rasenmähareals kann alternativ oder zusätzlich zu der oder den vorgenanten weiteren Mähbahn(en) der Rassenmähflächen vorhanden sein.

Bei dem Bahnplanungsverfahren kann ein Erfassen der zumindest einen Begrenzungskonturlinie(n) der ein oder mehreren Rasenmähfläche(n), insbesondere Mähfläche(n) und/oder ein Erfassen zumindest einer bevorzugt umlaufenden Begrenzungskonturlinie eines Rasenmähareals auf verschiedene Weise erreicht werden. Dies kann z.B. anhand einer Fahrbewegung des automatischen Rasenmähgeräts, insbesondere Mähroboters, entlang eines Begrenzungskabels oder einer Induktionsschleife oder anhand eines GPS-basierten Systems, insbesondere eines RTK- oder DGPS-Systems, kamera- und bildverarbeitungsbasiert, sensorbasiert, insbesondere LiDAR- oder ultraschallsensorbasiert und/oder kartenbasiert oder durch Kombinationen daraus erfolgen. Ein Erfassen der vorgenannten Begrenzungskonturlinie(n) von Rasenmähfläche(n) und/oder Rasenmähareal kann auch auf andere Weise erfolgen, z.B. durch eine externe und vom Rasenmähgerät getrennt angeordnete Erfassungseinheit. Dies kann z.B. durch eine Auswertung und Kartierung von Satellitenbildern, Drohnenbildern oder dergleichen erfolgen. Des weiteren sind auch andere Erfassungsmöglichkeiten gegeben. Ferner können eine Begrenzungskonturlinie der vorhandenen natürlichen Rasenfläche erfasst und hieraus die Begrenzungskonturlinie(n) von ein oder mehreren Rasenmähfläche(n) und/oder eines Rasenmähareals abgeleitet werden.

Bei dem Bahnplanungsverfahren ist es von Vorteil, wenn die zumindest eine erste oder zweite Mähbahn an einem Startpunkt (S) beginnt und ggf. an einem Endpunkt (E) endet. Der Startpunkt (S) und ggf. der Endpunkt (E) können bevorzugt an einem Eckbereich der besagten Begrenzungskonturlinie(n) angeordnet werden. Dies ist günstig für eine Ortsbestimmung und Lagedefinition von Startpunkt (S) und/oder Endpunkt (E). Ferner ist es günstig, wenn sich der Startpunkt (S) und/oder der Endpunkt (E) in der Nähe einer Parkstelle, insbesondere einer bevorzugt elektrischen Ladestation, des automatischen Rasenmähgeräts befindet.

Bei dem beanspruchten Bahnplanungsverfahren kann die Planung der zumindest einen Mähbahn mit einer Datenverarbeitungseinrichtung ausgeführt werden. Dies schließt auch die Planung von mehreren Mähbahnen ein.

Für das Bahnplanungsverfahren ist es günstig, wenn die Planung der zumindest einen Mähbahn mit einer Datenverarbeitungseinrichtung ausgeführt wird, die vollständig oder in Teilen an einem automatischen Rasenmähgerät ausgebildet ist. Es ist aber auch möglich, dass die Planung der zumindest einen Mähbahn mit einer vollständig oder in Teilen getrennt und extern vom automatischen Rasenmähgerät ausgebildeten Datenverarbeitungseinrichtung ausgeführt wird. Das Planungsergebnis kann dabei an das Rasenmähgerät bevorzugt drahtlos über eine Kommunikationseinrichtung übermittelt werden.

Die beanspruchte Rasenmähtechnik umfasst auch ein Steuerungsverfahren zur Steuerung einer Fahrbewegung eines automatischen, selbstfahrenden, selbstlenkenden und gegebenenfalls selbst navigierenden Rasenmähgeräts, insbesondere eines Rasenroboters. Die Steuerung der Fahrbewegung kann entlang zumindest einer Mähbahn erfolgen, die innerhalb einer begrenzten Rasenmähfläche verläuft. Die Planung der zumindest einen Mähbahn wird mit dem beanspruchten Bahnplanungsverfahren durchgeführt. Die gesteuerte Fahrbewegung des Rasenmähgeräts wird dann entlang der zumindest einen geplanten Mähbahn durchgeführt.

Das beanspruchte Steuerungsverfahren kann die Schritte umfassen einer Ableitung von Steuerungsdaten für die Fahrbewegung des Rasenmähgeräts entlang der zumindest einen Mähbahn in Form einer Trajektorie (T1, T2, T3), welche die betreffende zumindest eine Mähbahn beschreibt und einer Ausgabe der Steuerungsdaten in eine Steuereinheit des Rasenmähgeräts sowie einer Durchführung der Fahrbewegung des Rasenmähgeräts auf Basis der Steuerungsdaten.

Mit dem Steuerungsverfahren können mehrere Fahrbewegungen des Rasenmähgeräts entlang von mehreren Mähbahnen und Trajektorien (T1, T2, T3) auf Basis der jeweils zugehörigen Steuerungsdaten nacheinander durchgeführt werden. Vorteilhafterweise kann das Rasenmähgerät entlang der zumindest einen Trajektorie (T1, T2, T3) durchgängig in der gleichen Fahrtrichtung (F), insbesondere in Vorwärtsfahrt bewegt werden. Rangierbewegungen, insbesondere Rückwärtsfahrbewegungen, können entfallen oder zumindest signifikant reduziert werden.

Bei dem Steuerungsverfahren kann mit einer Steuereinheit eine Abweichung von der zumindest einen geplanten Mähbahn und/oder der zugeordneten Trajektorie (T1, T2, T3) detektiert werden. Ferner kann anhand des Detektionsergebnisses eine entsprechende Korrektur des Fahrwegs des Rasenmähgeräts bedarfsweise veranlasst werden.

Bei dem Steuerungsverfahren kann mit einer Navigationseinheit ein insbesondere temporäres und/oder unvorhergesehenes Hindernis detektiert werden. Anhand des Detektionsergebnisses kann eine entsprechende Korrektur des Fahrwegs des Rasenmähgeräts veranlasst werden.

Das beanspruchten Steuerungsverfahren kann mit einer Datenverarbeitungseinrichtung ausgeführt werden. Dies schließt auch die Steuerung entlang von mehreren Mähbahnen ein.

Für das Steuerungsverfahren ist es günstig, wenn es mit einer Datenverarbeitungseinrichtung ausgeführt wird, die vollständig oder in Teilen an einem automatischen Rasenmähgerät ausgebildet ist. Es ist aber auch möglich, dass das Steuerungsverfahren mit einer vollständig oder in Teilen getrennt und extern vom automatischen Rasenmähgerät ausgebildeten Datenverarbeitungseinrichtung ausgeführt wird. Die Steuerbefehle können dabei an das Rasenmähgerät bevorzugt drahtlos über eine Kommunikationseinrichtung übermittelt werden.

Mit dem Steuerungsverfahren kann das Rasenmähgerät, insbesondere dessen Rasenmähwerkzeug, dazu gesteuert werden, während der Bewegung des Rasenmähgeräts entlang der zumindest einen Trajektorie (T1,T2,T3) einen Rasenmähprozess, insbesondere einen Mähprozess, auszuführen. Der Rasenmähprozess kann während der gesamten besagten Bewegung des Rasenmähgeräts ausgeführt werden.

Die beanspruchte Rasenmähtechnik umfasst auch ein Rasenmähverfahren zur Durchführung eines Mähprozesses während einer gesteuerten Fahrbewegung eines automatischen, selbstfahrenden, selbstlenkenden und ggf. selbstnavigierenden Rasenmähgeräts, insbesondere eines Mähroboters, entlang zumindest einer Mähbahn die innerhalb einer begrenzten Rasenmähfläche verläuft. Die Steuerung des Rasenmähgeräts erfolgt dabei mit dem beanspruchten Steuerungsverfahren.

Bei dem Rasenmähverfahren kann ein steuerbares Rasenmähwerkzeug während der Fahrbewegung des Rasenmähgeräts entlang der Schleifenstrecken und auch entlang der rundgebogenen Wendestrecken der zumindest einen Mähbahn in Mähfunktion, insbesondere in Mähfunktion, bleiben. Dies ist ein vorteilhafter Effekt der Wendestrecken und steigert die Mäheffizienz. Durch den Entfall von Wendemanövern auf der Stelle sowie reversierenden Rangierfahrten können die dabei erfolgten Abschaltungen des Rasenmähwerkzeugs vermieden werden.

Die beanspruchte Rasenmähtechnik kann auch ein Rasenmähsystem beinhalten. Das Rasenmähsystem kann umfassen - ein automatisches selbstfahrendes, selbstlenkendes und ggf. selbstnavigierendes Rasenmähgerät, insbesondere einen Mähroboter, - eine Erfassungseinheit für eine Begrenzungskonturlinie zumindest einer Rasenmähfläche, und/oder eines Rasenmähareals und - eine Datenverarbeitungseinrichtung für das automatische Rasenmähgerät. Die Datenverarbeitungseinrichtung kann eine Auswerte- und Recheneinheit und eine Steuereinheit umfassen und kann dazu ausgelegt sein, das beanspruchte Bahnplanungsverfahren und/oder das beanspruchte Steuerungsverfahren auszuführen und die Steuerungsdaten an die Steuereinheit zur Steuerung der Fahrbewegung des selbstfahrenden Rasenmähgeräts auszugeben. Mit dem Rasenmähsystem können die Bahnplanung und die hieraus abgeleitete Steuerung des automatischen Rasenmähgeräts und ggf. seines Rasenmähwerkzeugs besonders effizient umgesetzt werden.

Das Rasenmähsystem kann eine Navigationseinheit für das automatische Rasenmähgerät umfassen. Das Rasenmähsystem kann auch eine Erfassungseinheit für die vorgenannte und beanspruchte Erfassung von Begrenzungskonturlinie(n) der zumindest einen Rasenmähfläche, insbesondere Mähfläche, und/oder oder des Rasenmähareals, insbesondere Mähareals, umfassen.

Die Erfassungseinheit und/oder die Auswerte- und Recheneinheit, und/oder die Steuereinheit und/oder die Navigationseinheit können in dem automatischen Rasenmähgerät implementiert sein. Sie können alternativ oder zusätzlich als dezentrale, insbesondere externe, Einheit oder Einheiten ausgebildet sein, welche mit dem Rasenmähgerät über eine bevorzugt drahtlose Kommunikationseinrichtung verbunden ist oder sind.

Das Rasenmähsystem kann auch eine bevorzugt mobile Fernbedieneinheit umfassen, die mittels einer bevorzugt drahtlosen Kommunikationseinrichtung mit dem automatischen Rasenmähgerät und ggf. mit der Erfassungseinheit bevorzugt bidirektional kommunizieren kann. Die bevorzugt mobile Fernbedieneinheit kann Signale, insbesondere Befehle, an das automatische Rasenmähgerät senden und/oder kann von diesem Signale, insbesondere Zustandsmeldungen oder Ereignismeldungen, z.B. über Hindernisse, Verlassen der geplanten zumindest einen Mähbahn bzw. Trajektorie, empfangen.

Mit der bevorzugt mobilen und bevorzugt computergestützten Fernbedieneinheit kann das automatische Rasenmähgerät manuell ferngesteuert werden. Ferner können die beanspruchten Bahnplanungs-, Steuerungs,- und/oder Rasenmähverfahren mit der Fernbedieneinheit ausgeführt und ggf. auch programmiert werden. Die bevorzugt mobile Fernbedieneinheit kann auch die vorgenannte Datenverarbeitungseinrichtung beinhalten. Zudem können die besagte Erfassungseinheit und/oder die Auswerte- und Recheneinheit, und/oder die Steuereinheit und/oder die Navigationseinheit auf der bevorzugt mobilen Fernbedieneinheit ausgebildet sein.

Die bevorzugt mobilen Fernbedieneinheit kann als zugeordnete und speziell für das Rasenmähsystem adaptierte Einheit ausgebildet sein. Sie kann aber auch als universelles Telekommunikationsgerät, z.B. als Smartphon, Tablet, Notebook oder dgl., ausgebildet sein und kann ein gespeichertes Bedienprogramm, z.B. eine sog. Rasenmäh-App enthalten. Dies kann das beanspruchte Softwareprodukt sein. Die bevorzugt computergestützte Fernbedieneinheit kann auch stationär, z.B. an einer Park- und/oder Ladestation des automatischen Rasenmähgeräts angeordnet sein.

Die beanspruchte Rasenmähtechnik kann ferner ein automatisches, selbstfahrendes und selbstlenkendes sowie ggf. selbstnavigierendes Rasenmähgerät, insbesondere einen Mähroboter, beinhalten. Das Rasenmähgerät kann fahrerlos und autonom sein. Es kann mit dem beanspruchten computerimplementierten Steuerverfahren steuerbar sein. Das automatische Rasenmähgerät kann wenigstens eine Antriebs- und Lenkeinheit und ggf. eine Steuereinheit umfassen. Das automatische Rasenmähgerät kann von der Antriebs- und Lenkeinheit angetriebene linke und rechte Fördermittel, insbesondere angetriebene Räder, umfassen, wobei ein Lenken und eine Kurvenfahrt sowie ein Wenden auf der Stelle z.B. durch unterschiedliche Geschwindigkeiten und ggf. auch unterschiedliche Bewegungsrichtungen der angetriebenen linken und rechten Fördermittel erfolgen können. Ein solches automatisches, insbesondere autonomes, Rasenmähgerät ist sehr wendig, insbesondere bei Rädern als Fördermitteln. Es verursacht auch nur geringfügige Fahrspuren und keine oder niedrige Belastungen des Rasens, insbesondere mit der genannten Bahnplanung.

Die Steuereinheit kann dazu ausgelegt sein, mit dem computerimplementierten Steuerungsverfahren generierte Steuerungsdaten zu empfangen und die Antriebs- und Lenkeinheit für eine Fahrbewegung des Rasenmähgeräts anhand der Steuerungsdaten zu steuern. Das automatische Rasenmähgerät, insbesondere die Steuereinheit, kann Mittel zur Detektion der aktuellen Position des Rasenmähgeräts auf der zumindest einen Rasenmähfläche und/oder dem Rasenmähareal und auf der zumindest einen Mähbahn und/oder Trajektorie umfassen. Mit diesen Mitteln kann auch überprüft werden, ob die geplante zumindest eine Mähbahn und/oder Trajektorie eingehalten oder verlassen wird. Bei einem detektierten Verlassen kann auch mittels der Steuereinheit eine gezielte Rückführung des automatischen Rasenmähgeräts auf die geplante zumindest eine Mähbahn durchgeführt werden.

Das automatische Rasenmähgerät kann eine Navigationseinheit umfassen. Diese kann z.B. optische, akustische und/oder andere Sensoren zur Umfelderfassung sowie Rechen- und Auswertemittel zur Erkennung eines Hindernisses und zu dessen Umfahrung beinhalten.

Das automatische Rasenmähgerät kann eine besagte Erfassungseinheit für die Bezugskonturlinie(n) umfassen. Es kann auch ein ein bevorzugt steuerbar angetriebenes, insbesondere rotierendes, Rasenmähwerkzeug aufweisen.

Das automatische Rasenmähgerät kann ferner eine bevorzugt drahtlose und bevorzugt bidirektionale Kommunikationseinrichtung umfassen. Dabei kann z.B. eine Sende- und/oder Empfangseinheit am automatischen Rasenmähgerät implementiert sein. Die bevorzugt drahtlose Kommunikation kann per Funk, Bluetooth, W-Lan, optisch oder auf beliebig andere Weise erfolgen.

Die beanspruchte Rasenmähtechnik kann auch ein Softwareprodukt umfassen, das auf einem Datenträger gespeichert ist oder durch eine Datenschnittstelle kommuniziert wird. Das Softwareprodukt kann Anweisungen enthalten, die bei Ausführung auf einer Datenverarbeitungseinrichtung ein beanspruchtes Bahnplanungsverfahren und/oder ein beanspruchtes Steuerungsverfahren und/oder ein beanspruchtes Rasenmähverfahren implementieren. Die Datenverarbeitungseinrichtung kann eine Datenverarbeitungseinrichtung eines automatischen, selbstfahrenden und selbstlenkenden sowie ggf. selbstnavigierenden Rasenmähgeräts sein, insbesondere eine Auswerte- und Recheneinheit und/oder eine Steuerungseinheit des Rasenmähgeräts. Die Datenverarbeitungseinrichtung kann auch extern und insbesondere in einer bevorzugt mobilen Fernbedieneinheit implementiert sein.

Die beschriebenen und beanspruchten Vorrichtungsmerkmale des Rasenmähsystems und des automatischen Rasenmähgeräts können mit Vorteil beim beanspruchten Bahnplanungsverfahren und/oder Steuerungsverfahren und/oder Rasenmähverfahrens eingesetzt werden. Umgekehrt können auch die beschriebenen und beanspruchten Verfahrensmerkmale vorteilhafter Weise bei der/den beanspruchten Vorrichtung(en) eingesetzt werden. Entsprechendes gilt für die Merkmale des Softwareprodukts.

Die beanspruchten Verfahren und Vorrichtungen können folgende Ausgestaltungen haben, die jeweils einzeln oder in Kombination einsetzbar sind.

Bei dem beanspruchten Bahnplanungsverfahren können zumindest einige Bahnschleifen einer Mähbahn jeweils eine ringartige Schleifenform haben, bei welcher die rundgebogenen Wendestrecken der betreffenden Bahnschleife gegeneinander gerichtet sind und bevorzugt eine unterschiedliche Weite (W1,W2) haben.

Bei dem beanspruchten Bahnplanungsverfahren können die rundgebogenen Wendestrecken an den jeweiligen Enden benachbarter Bahnschleifen einer Mähbahn einander überschneiden.

Bei dem beanspruchten Bahnplanungsverfahren können die Bahnschleifen der Mähbahn(en) jeweils bis zu den zugeordneten, einander gegenüberliegenden Konturlinienabschnitten, insbesondere bis in einen Konturenrandbereich von einer Mähbahnbreite (B), reichen.

Bei dem beanspruchten Bahnplanungsverfahren können die rundgebogenen Wendestrecken der Bahnschleifen einer Mähbahn jeweils nahe und entlang der zugeordneten, einander gegenüberliegenden Konturlinienabschnitte, insbesondere in einem Konturenrandbereich von einer Mähbahnbreite (B), verlaufen.

Bei dem beanspruchten Bahnplanungsverfahren können die rundgebogenen Wendestrecken einer Mähbahn jeweils eine Kreisbogenform oder Elipsenbogenform oder eine bereichsweise gerade Form mit rund gebogenen Übergängen zu den Enden der anschließenden Schleifenstrecken aufweisen.

Bei dem beanspruchten Bahnplanungsverfahren können die Begrenzungskonturlinie(n) der Rasenbearbeitungsfläche(n) im Wesentlichen eine Rechteckform oder eine Trapezform aufweisen.

Bei dem beanspruchten Bahnplanungsverfahren können eine Rasenmähfläche und/oder ein Rasenmähareal innerhalb einer natürlichen vorhandenen Rasenfläche definiert werden.

Bei dem beanspruchten Bahnplanungsverfahren können ein Erfassen der Begrenzungskonturlinie(n) einer Rasenmähfläche und/oder eines Rasenmähareals anhand einer Fahrbewegung des automatischen Rasenmähgerät, insbesondere Mähroboters, entlang eines Begrenzungskabels oder einer Induktionsschleife, anhand eines GPS-basierten Systems, insbesondere eines RTK- oder DGPS-Systems, kamera- und bildverarbeitungsbasiert, sensorbasiert, insbesondere LiDAR- oder ultraschallsensorbasiert und/oder kartenbasiert oder durch Kombinationen daraus erfolgen.

Bei dem beanspruchten Bahnplanungsverfahren können die zumindest eine erste oder zweite Mähbahn an einem Startpunkt (S) beginnen und ggf. an einem Endpunkt (E) enden, wobei der Startpunkt (S) und ggf. der Endpunkt (E) bevorzugt an einem Eckbereich einer Begrenzungskonturlinie(n) angeordnet wird/werden.

Bei dem beanspruchten Bahnplanungsverfahren kann die Planung der zumindest einen Mähbahn mit einer Datenverarbeitungseinrichtung ausgeführt werden, insbesondere mit einer vollständig oder in Teilen am Rasenmähgerät ausgebildeten Datenverarbeitungseinrichtung und/oder mit einer vollständig oder in Teilen getrennt und extern vom Rasenmähgerät ausgebildeten Datenverarbeitungseinrichtung, wobei das Planungsergebnis dem Rasenmähgerät bevorzugt drahtlos über eine Kommunikationseinrichtung übermittelt wird.

Bei dem beanspruchten Steuerungsverfahren können mehrere Fahrbewegungen des automatischen Rasenmähgeräts entlang von mehreren Mähbahnen und Trajektorien (T1,T2,T3) auf Basis der jeweils zugehörigen Steuerungsdaten nacheinander durchgeführt werden.

Bei dem beanspruchten Steuerungsverfahren kann das automatische Rasenmähgerät entlang der zumindest einen Trajektorie (T1,T2,T3) durchgängig in der gleichen Fahrtrichtung (F), insbesondere in Vorwärtsfahrt, bewegt werden.

Bei dem beanspruchten Steuerungsverfahren können mit einer Steuereinheit eine Abweichung von der zumindest einen geplanten Mähbahn und/oder der zugeordneten Trajektorie (T1,T2,T3) detektiert werden und anhand des Detektionsergebnisses eine entsprechende Korrektur des Fahrwegs des automatischen Rasenmähgeräts vorgenommen werden.

Das beanspruchte Steuerungsverfahren kann mit einer Datenverarbeitungseinrichtung ausgeführt werden, insbesondere mit einer vollständig oder in Teilen am Rasenmähgerät ausgebildeten Datenverarbeitungseinrichtung und/oder mit einer vollständig oder in Teilen getrennt und extern vom Rasenmähgerät ausgebildeten Datenverarbeitungseinrichtung, wobei das Steuerungsergebnis, insbesondere Steuerbefehle, dem Rasenmähgerät bevorzugt drahtlos über eine Kommunikationseinrichtung übermittelt wird/werden.

Bei dem beanspruchten Rasenmähsystem kann die Erfassungseinheit dazu ausgelegt sein, die Begrenzungskonturlinie(n) zumindest einer Rasenmähfläche und/oder eines Rasenmähareals anhand einer Fahrbewegung des automatischen Rasenmähgeräts entlang eines Begrenzungskabels oder einer Induktionsschleife, anhand eines GPS-basierten Signals, insbesondere eines RTK- oder DGPS-Signals, anhand eines Kamera- oder Bildverarbeitungssignals, eines Sensorsignals, insbesondere eines LiDAR- oder Ultraschallsensorsignal oder anhand einer digitalen Karte oder durch Kombinationen daraus zu erfassen und an die Datenverarbeitungseinrichtung, insbesondere die Auswerte- und Recheneinheit, auszugeben.

Die Erfindung ist in den Zeichnungen beispielhaft und schematisiert dargestellt. Im Einzelnen zeigen:
- Figur 1:: eine Rasenmähfläche mit einer spiralförmigen Mähbahn,
- Figur 2:: eine vergrößerte Ansicht eines Details II von Figur 1 mit zwei Bahnschleifen,
- Figur 3:: ein Rasenmähareal mit Unterteilung in mehrere Rasenmähflächen und mit Anordnung innerhalb einer natürlichen vorhandenen Rasenfläche,
- Figur 4:: ein Rasenmähareal mit einer umlaufenden Begrenzungskonturlinie und einer dortigen Randmähbahn,
- Figur 5:: ein Rasenmähareal mit Unterteilung in rechteckige und trapezförmige Rasenmähflächen und dortige Mähbahnen,
- Figur 6 und 7:: Varianten eines einheitlichen oder in Rasenmähflächen unterteilten Rasenmähareals und dortige Mähbahnen,
- Figur 8:: eine weitere Variante eines Rasenmähareals mit einander kreuzenden ersten und zweiten Mähbahnen,
- Figur 9:: eine abgebrochen dargestellte Mähbahn an einem Hindernis
- Figur 10:: eine schematische Darstellung eines automatischen Rasenmähgeräts und seiner Komponenten und
- Figur 11:: eine Variante des automatischen Rasenmähgeräts von Figur 10.

Die Erfindung betrifft ein Bahnplanungsverfahren, ein Steuerungsverfahren und ein Rasenmähverfahren für und mit jeweils einem automatischen Rasenmähgerät (2). Die Erfindung betrifft ferner ein Rasenmähsystem (1), ein automatisches Rasenmähgerät (2) und ein Softwareprodukt, das auf einem Datenträger gespeichert ist oder durch eine Datenschnittstelle kommuniziert wird.

Die Rasenbearbeitung erfolgt in den gezeigten Ausführungsbeispielen durch Mähen des Rasens bzw. des Grases.

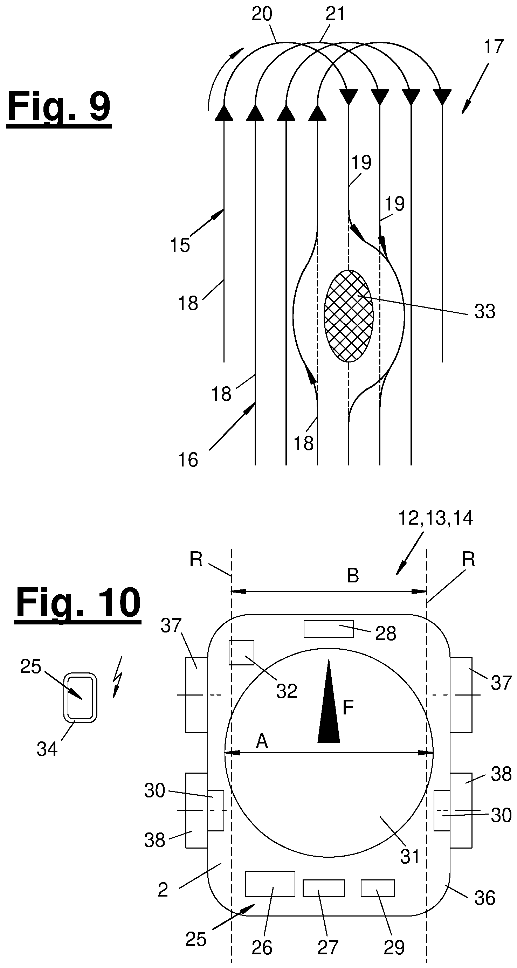

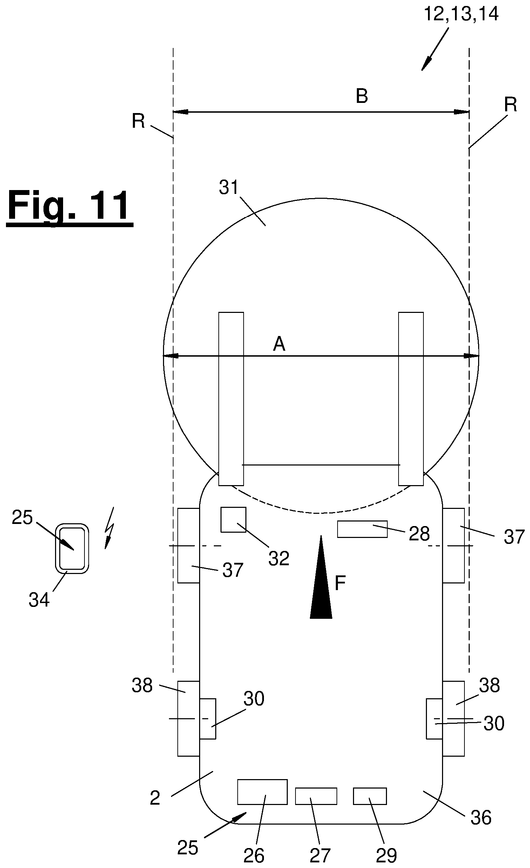

Figur 10 und 11 zeigen ein solches automatisches, selbstfahrendes und selbstlenkendes sowie ggf. selbstnavigierendes Rasenmähgerät (2). Dieses ist bevorzugt fahrerlos und autonom. Es kann z.B. als Mähroboter ausgebildet sein. Das Rasenmähgerät (2) umfasst ein Rasenmähwerkzeug (31), welches ein z.B. rotierend und gesteuert angetriebenes Messer umfasst. Alternativ ist eine andere, ggf. auch wechselbare, Werkzeugausbildung möglich. Das Rasenmähwerkzeug (31) hat eine Arbeitsbreite (A), die z.B. vom Mähkreis des Mähmessers bestimmt wird. Bei einer anderen Werkzeugausbildung ist eine andere Arbeitsbreite möglich, insbesondere bei einer mehrteiligen oder wechselbaren Werkzeugausbildung.

Das automatische Rasenmähgerät (2) weist ein Chassis (36) mit dem besagten Rasenmähwerkzeug (31) und mit z.B. linken und rechten Fördermitteln (37,38), insbesondere Rädern, Raupen, Ketten oder dgl. auf. Das Rasenmähgerät (2) kann selbsttätig fahren und selbsttätig lenken. Es weist hierfür eine steuerbare Antriebs- und Lenkeinheit (30) für die linken und rechten Fördermittel (38) auf. Ein Lenken und eine Kurvenfahrt oder auch ein Wenden auf der Stelle sind z.B. durch unterschiedliche Geschwindigkeiten und ggf. auch unterschiedliche Bewegungsrichtungen der angetriebenen linken und rechten, Fördermittel (38), insbesondere angetriebenen Räder, möglich. In Figur 10 und 11 sind z.B. die hinteren Fördermittel (38) auf der linken und rechten Seite des automatischen Rasenmähgeräts (2) angetrieben.

Bei gleicher Bewegungsrichtung, insbesondere Drehrichtung, und unterschiedlicher Geschwindigkeit der angetriebenen linken und rechten Fördermittel (38) wird eine Kurve in Fahrtrichtung (F), insbesondere in Vorwärtsfahrtrichtung, gefahren, deren Krümmung von der Geschwindigkeitsdifferenz zwischen linken und rechten Fördermitteln (38) abhängt. Eine Geradeausfahrt ist bei gleicher Bewegungsrichtung und gleicher Geschwindigkeit der angetriebenen linken und rechten Fördermittel (38) möglich. Bei entgegengesetzter Bewegungsrichtung, insbesondere Drehrichtung, der angetriebenen linken und rechten Fördermittel (38) wird auf der Stelle gewendet.

Das in Figur 10 und 11 gezeigte Rasenmähgerät (2) weist z.B. vordere und nicht angetriebene, sowie um eine Hochachse frei schwenkbare linke und rechte Fördermittel (37), insbesondere Lenk-Räder, auf. Alternativ kann ein vorderes und zentrales, frei schwenkbares Fördermittel (37), insbesondere Lenk-Rad, vorgesehen sein. Die Richtungsangabe von/hinten und links/rechts beziehen sich auf die Fahrtrichtung (F), insbesondere Vorwärtsfahrtrichtung, des Rasenmähgeräts (2).

Die Antriebs- und Lenkeinheit (30) kann z.B. einen oder mehrere Elektromotoren, insbesondere Gleichstrommotoren, aufweisen. Ferner ist eine nicht dargestellte Energieversorgung, z.B. ein wiederaufladbarer elektrischer Akku oder dgl. vorhanden. Alternativ sind andere Ausbildungen der Antriebs-, Lenk- und Energietechnik möglich.

Bei dem in Figur 10 gezeigten automatischen Rasenmähgerät (2) ist z.B. das Rasenmähwerkzeug (31) im Chassis (36) und zwischen den Fördermitteln (37,38) angeordnet. Ein solches autonomes Rasenmähgerät (2) wird auch als Mähroboter bezeichnet.

Bei dem in Figur 11 dargestellten automatische Rasenmähgerät (2) ist z.B. das Rasenmähwerkzeug (31) an oder vor dem Chassis (36) angeordnet. Das Chassis (36) mit der Antriebs- und Lenkeinheit (30) und mit den Fördermitteln (37,38) bildet z.B. einen automatischen, selbstfahrenden und selbstlenkenden sowie sowie ggf. selbstnavigierenden Geräteträger, der bevorzugt fahrerlos und autonom ist. Der Geräteträger trägt und transportiert das Rasenmähwerkzeug (31), welches in gleicher oder anderer Weise als in Figur 10 ausgebildet sein kann. Das Rasenmähwerkzeug (31) kann z.B. mehrere rotierende Messer oder auch Scheiben nebeneinander aufweisen. Es kann auch einen Mähbalken mit linear oszillierenden Messern umfassen.

Das in Figur 10 und 11 dargestellte Rasenmähgerät (2) hat vier Fördermittel (37,38) in Form von Rädern. Bei einer anderen und nicht dargestellten Variante des automatischen Rasenmähgeräts (2) können die Zahl, Ausbildung und Anordnung der Fördermittel (37,38) anders sein.

Das automatische Rasenmähgerät (2) weist z.B. eine am Gerät implementierte Steuereinheit (26) sowie eine Auswerte- und Recheneinheit (27) und eine drahtlose Kommunikationseinrichtung (32) auf. Die Auswerte- und Recheneinheit (27) kann in die Recheneinheit (26) implementiert sein. Die Steuereinheit (26) und die Auswerte- und Recheneinheit (27) können hardwaremäßig und/oder softwaremäßig ausgebildet sein.

Die Steuereinheit (26) steuert das automatische Rasenmähgerät (2) mittels der Antriebs- und Lenkeinheit (30) entlang zumindest einer vorgegebenen und aus einem nachfolgend erläuterten Steuerungsverfahren gewonnenen Trajektorie (T1,T2,T3), welche wiederum mittels eines ebenfalls nachstehend erläuterten Bahnplanungsverfahrens gewonnen wurden.

Die Steuereinheit (26) kann mit geeigneten Mitteln auch die Einhaltung der vorgegebenen Trajektorie überwachen und etwaige Abweichungen seiner Fahrbewegungen von der Trajektorie detektieren. Hierfür kann die Steuereinheit (26) z.B. die Position, die Fahrtrichtung, die Geschwindigkeit und den zurückgelegten Weg des automatischen Rasenmähgeräts (2) mit einer geeigneten Sensorik detektieren. Diese kann z.B. Drehzahlsensoren, Abstandssensoren, ein Kamerasystem, ein GPS-System, insbesondere ein RTK- oder DGPS-System, Motorsensoren oder dgl. aufweisen. Die Steuereinheit (26) kann zur Lageorientierung auch ein Kartensystem umfassen.

Die Steuereinheit (26) und/oder die Auswerte- und Recheneinheit (27) können eine Datenverarbeitungseinrichtung (25) darstellen. Diese ist bevorzugt als elektronische Recheneinheit ausgestaltet und kann ein oder mehrere Prozessoren und Speicher umfassen. Die Datenverarbeitungseinrichtung (25) kann in dem genannten Softwareprodukt enthaltene Anweisungen ausführen, die ein Bahnplanungsverfahren und/oder ein Steuerungsverfahren und/oder ein Rasenmähverfahren implementieren.

Die Datenverarbeitungseinrichtung (25) kann vollständig oder in Teilen am Rasenmähgerät (2) ausgebildet sein. Die Datenverarbeitungseinrichtung (25) kann alternativ vollständig oder in Teilen getrennt und extern vom Rasenmähgerät (2) ausgebildet sein und kann bevorzugt drahtlos mit dem Rasenmähgerät (2), insbesondere mit dessen Steuereinheit (26), kommunizieren. Die Steuereinheit (26) und/oder die Auswerte- und Recheneinheit (27) können ebenfalls vollständig oder in Teilen am Rasenmähgerät (2) ausgebildet sein oder können vollständig oder in Teilen getrennt und extern vom Rasenmähgerät (2) ausgebildet sein und bevorzugt drahtlos mit dem Rasenmähgerät (2), z.B. mit dessen Antriebs- und Lenkeinheit (30), kommunizieren. Die genannten Kommunikationen können bidirektional sein. Sie können mit der Kommunikationseinrichtung (32) durchgeführt werden.

Die Kommunikationseinrichtung (32) kann eine Sende- und Empfangseinheit für drahtlose Kommunikationssignale, z.B. Funksignale, WLAN-Signale, optische Signale, z.B. Infrarot-Signale oder dgl. umfassen. Am automatischen Rasenmähgerät (2) kann außerdem eine nachfolgend erläuterte Erfassungseinheit (29) angeordnet und implementiert sein.

Das automatische Rasenmähgerät (2) kann außerdem eine Navigationseinheit (28) umfassen. Mit dieser können z.B. Hindernisse im Fahrweg, insbesondere temporäre oder unvorhergesehene Hindernisse, detektiert und umfahren werden. Hierbei kann von der vorgegebenen Trajektorie (T1,T2,T3) für die Umfahrung abgewichen werden, wobei das Rasenmähgerät (2) anschließend wieder auf die Trajektorie zurückgeführt wird. Dies kann mittels der Steuereinheit (26) geschehen. Die Navigationseinheit (28) kann ein oder mehrere geeignete Sensoren zur Hinderniserkennung, z.B. Abstandssensoren, Kamerasysteme oder dergleichen und geeignete Auswerte- und Verarbeitungsmittel für die gelieferten Sensor-und Bilddaten umfassen.

Die vorgenannten Komponenten (25,26,27,28,29,30,32) können am automatischen Rasenmähgerät (2) untereinander signaltechnisch und steuertechnisch verbunden sein. Sie können auch an die genannte Energieversorgung angeschlossen sein. Die Steuereinheit (26) kann außerdem das Rasenmähwerkzeug (31) steuern.

Das automatische Rasenmähgerät (2) führt einen Rasenmähprozess auf einer Rasenmähfläche (3,4,5) durch. Es verfolgt dabei zumindest eine mittels eines Bahnplanungsverfahrens festgelegte Mähbahn (12,13,14), wobei mittels eines Steuerverfahrens aus der mindestens einen geplanten Mähbahn (12,13,14) eine entsprechende Trajektorie (T1,T2,T3) abgeleitet wird. Das automatische Rasenmähgerät (2) führt eine Fahrbewegung entlang der mindestens einen Trajektorie aus und bewegt sich dabei in einer Fahrtrichtung (F), die vorzugsweise entlang der mindestens einen Mähbahn (12,13,14) beibehalten wird. Dies ist vorzugsweise eine Vorwärtsrichtung. Sie ist in den Zeichnungen durch einen Pfeil am Rasenmähgerät (2) dargestellt.

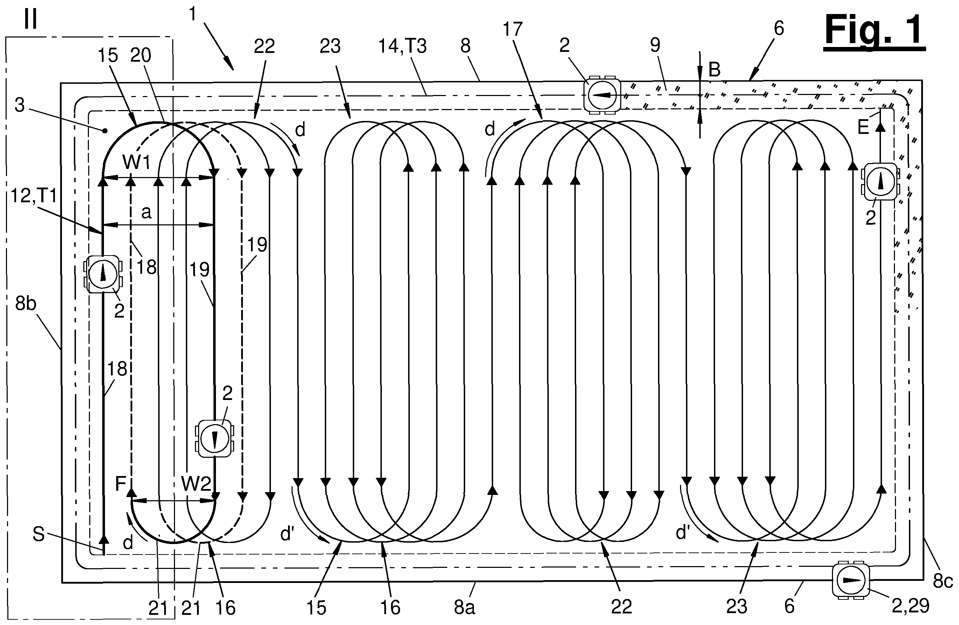

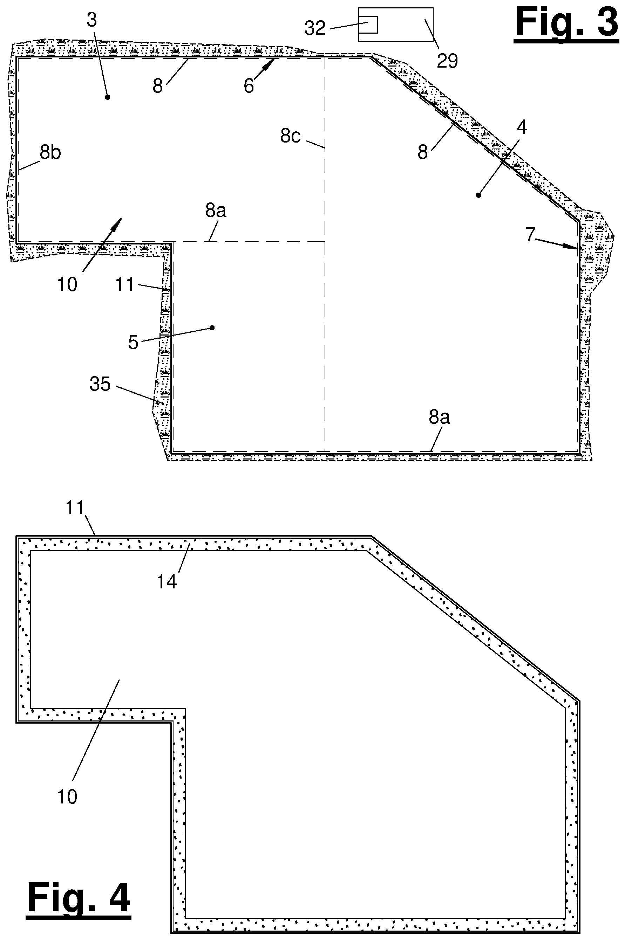

Das vorgenannte Bahnplanungsverfahren dient der Planung von zumindest einer Mähbahn (12,13,14) des automatischen, selbstfahrenden und selbstlenkenden sowie ggf. selbstnavigieren Rasenmähgeräts (2), die bei einem Rasenmähprozess abgefahren wird. Die besagte, zumindest eine Mähbahn (12,13,14) verläuft innerhalb einer begrenzten Rasenmähfläche (3,4,5), die bevorzugt eine im Wesentlichen rechteckige oder trapezartige Form haben kann. Alternativ oder zusätzlich sind auch andere Formen einer Rasenmähfläche (3,4,5) möglich. In Figur 1 ist beispielhaft eine rechteckige Rasenmähfläche (3) dargestellt. Figur 3 zeigt eine trapezförmige Rasenmähfläche (4) und zwei verschieden rechteckige Rasenmähflächen (3,5). Die Rechteck- oder Trapezform kann die gezeigten geraden Verbindungslinien zwischen den Ecken aufweisen. Es sind aber auch gebogene Linien oder Linienbereiche möglich, insbesondere in Anpassung an äußere Umgebungserfordernisse, z.B. von einer vorhandenen natürlichen Rasenfläche (35), von Hindernissen etc..

Die mindestens eine Rasenmähfläche (3,4,5) wird von einer bevorzugt umlaufenden Begrenzungskonturlinie (6,7) randseitig begrenzt. Das Bahnplanungsverfahren kann als ein computerimplementiertes Verfahren mittels der vorgenannten Datenverarbeitungseinrichtung (25) ausgeführt werden.

Bei der Bahnplanung wird die zumindest eine Rasenmähfläche (3,4,5) innerhalb einer natürlichen vorhandenen Rasenfläche (35) definiert. Figur 3 zeigt beispielhaft eine solche Rasenfläche (35). Die zumindest eine Rasenmähfläche (3,4,5) wird dabei in die besagte natürliche Rasenfläche (35) bestmöglich eingepasst. Hierbei können auch mehrere gleichartige oder verschiedene Rasenmähflächen (3,4,5) kombiniert und zusammengesetzt werden. Hierbei kann ein Rasenmähareal (10), gebildet werden. Das Rasenmähareal (10) kann auch eine einheitliche Rasenmähfläche gemäß Figur 4 darstellen.

Bei dem Bahnplanungsverfahren werden mehrere Schritte ausgeführt. Zum einen wird die besagte zumindest eine Begrenzungskonturlinie (6,7) der mindestens einen Rasenmähfläche (3,4,5) erfasst. Dies kann mittels der Erfassungseinheit (29) erfolgen. Bei einem Rasenmähareal (10) kann alternativ oder zusätzlich dessen bevorzugt umlaufende Begrenzungskonturlinie (11) erfasst werden. Die Begrenzungskonturlinie (11) des Rasenmähareals (10) kann eine oder mehrere Begrenzungskonturlinien (6,7) von mindestens einer Rasenmähfläche (3,4,5) beinhalten.

Ferner wird eine Arbeitsbreite (A) des automatischen Rasenmähgeräts (2) erfasst und hieraus die Mähbahnbreite (B) der zumindest einen geplanten Mähbahn (12,13,14) definiert. Figur 10 zeigt diese Zuordnung sowie die Mähbahnränder (R) und die Mähbahnbreite (B). Die Mähbahnbreite (B) kann gleich groß wie die Arbeitsbreite (A) sein. Die Mähbahnbreite (B) kann auch kleiner als die Arbeitsbreite (A) sein.

Bei der Bahnplanung wird wenigstens eine erste Mähbahn (12) geplant. Diese deckt die wenigstens eine Rasenmähfläche (3,4,5) möglichst vollflächig ab. Die geplante Mähbahn (12) umfasst mehrere längliche Bahnschleifen (15,16), die aneinander fortlaufend anschließen und eine exzentrische, fortschreitende Spiralbahn (17) bilden.

In Figur 1 sind zur besseren Erkennbarkeit eine erste Bahnschleife (15) mit fetten durchgezogenen Strichen und eine zweite anschließende Bahnschleife (16) mit einer dünneren gestrichelten Linie dargestellt. Die gleiche Darstellung findet sich auch in den anderen Figuren.

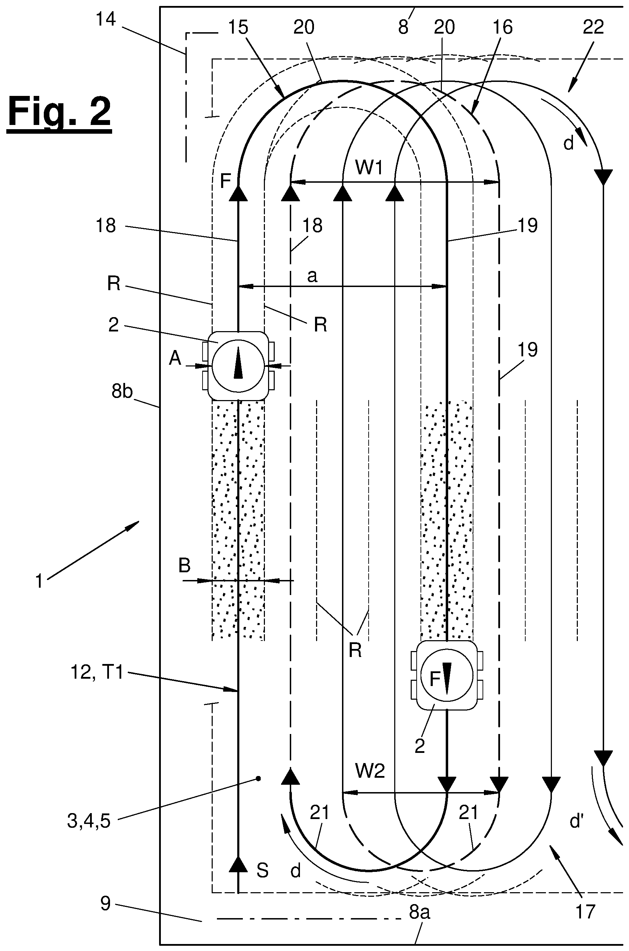

Die Bahnschleifen (15,16) sind bevorzugt gleichartig ausgebildet. Figur 2 zeigt hierzu die Detailausbildung. Aus Figur 1 ist die gebildete exzentrische, fortschreitende Spiralbahn (17) ersichtlich. Die aneinander anschließenden Bahnschleifen (15,16) sind mit ihren nicht im Einzelnen dargestellten Mittelpunkten hintereinander in der gezeichneten Horizontalrichtung aufgereiht. Dies ist die Fortschrittsrichtung der Spiralbahn (17).

Wie Figur 1 und 2 verdeutlichen, umfassen die länglichen Bahnschleifen (15,16) jeweils zwei parallele lineare Schleifenstrecken (18,19), an deren Enden jeweils eine quer zu den Schleifenstrecken (18,19) verlaufende und rund gebogene Wendestrecke (20,21) anschließt. Zumindest einige Bahnschleifen (15,16,15a,16a) einer Mähbahn (12,13) haben jeweils eine ringartige Schleifenform, bei welcher die rundgebogenen Wendestrecken (20,21,20a,21a) der betreffenden Bahnschleife (15,16,15a,16a) gegeneinander gerichtet sind und bevorzugt eine unterschiedliche Weite (W1,W2) haben.

Die parallelen linearen Schleifenstrecken (18,19) der Bahnschleifen (15,16) haben jeweils einen Querabstand (a) voneinander, der dem Mehrfachen, bevorzugt ganzzahligen Mehrfachen, der Mähbahnbreite (B) entspricht. Bevorzugt entspricht der Querabstand (a) mindestens dem Dreifachen, Vierfachen oder Fünffachen der Mähbahnbreite (B). Die Mähbahnbreite (a) ist auf die Bahnmitten der linearen Schleifenstrecken (18,19) bezogen. Die besagten Trajektorien (T1, T2, T3) verlaufen ebenfalls in der Mitte der jeweiligen Mähbahn (12,13,14).

Die rund gebogenen Wendestrecken (20,21) sind z.B. als Kreisbögen ausgebildet, können aber auch eine andere gebogene Form haben. Die an die erste lineare Schleifenstrecken (18) anschließende rund gebogene Wendestrecke (20) verbindet die beiden parallelen Schleifenstrecken (18,19) und hat eine Weite (W1), die dem Querabstand (a) entsprechen kann. Die an das andere Ende der zweiten linearen Schleifenstrecke (19) anschließende zweite rund gebogene Wendestrecke (21) hat eine geringere Weite (W2), die bevorzugt um eine Mähbahnbreite (B) kleiner ist als die erste Weite (W1). An das freie Ende der zweiten rund gebogenen Wendestrecke (21) schließt die erste lineare Schleifenstrecke (18) der zweiten Bahnschleife (16) an.

Wie Figur 1 und 2 verdeutlichen, überschneiden die rund gebogenen Wendestrecken (20,21) der benachbarten Bahnschleifen (15,16) einander. Dies sind die am jeweils gleichen Ende benachbarter Bahnschleifen befindlichen Wendestrecken. Sie können sich außerdem mit weiteren rund gebogenen Wendestrecken (20,21) der nächstfolgenden Bahnschleifen überschneiden.

Wie Figur 1 verdeutlicht, erstrecken sich die parallelen, linearen Schleifenstrecken (18,19) der länglichen Bahnschleifen (15,16) jeweils zwischen einander gegenüberliegenden Konturlinienabschnitten (8,8a) der Begrenzungskonturlinie (6,7). Die linearen Schleifenstrecken (18,19) können sich dabei entlang von ein oder mehreren weiteren Konturlinienabschnitten (8b,8c) erstrecken, welche die besagten einander gegenüberliegenden Konturlinienabschnitte (8,8a) miteinander verbinden. Die einander gegenüberliegenden Konturlinienabschnitte (8,8a) sind in Figur 1 und 2 mit Abstand zueinander angeordnet und verlaufen parallel zueinander. Sie können auch schräg zueinander verlaufen.

Gemäß Figur 1 und 2 reichen die Bahnschleifen (15,16) der zumindest einen Mähbahn (12,13) jeweils bis zu den zugeordneten, einander gegenüberliegenden Konturlinienabschnitten (8,8a). Sie reichen vorzugsweise bis in den Konturenrandbereich (9), dessen Breite bevorzugt einer Mähbahnbreite (B) entspricht. Gemäß Figur 2 erstrecken sich die Mähbahnränder (8) an den rund gebogenen Wendestrecken (20,21) bis an oder bis in den Konturenrandbereich (9). Die rund gebogenen Wendestrecken (20,21) der Bahnschleifen (15,16) verlaufen dabei nahe und entlang der einander gegenüberliegenden Konturlinienabschnitte (8,8a).

Wie Figur 1 verdeutlicht, sind die Bahnschleifen (15,16) der zumindest einen Mähbahn (12) in mehrere Bahnschleifengruppen (22,23) gegliedert. Die Bahnschleifen (15,16) haben innerhalb ihrer jeweiligen Bahnschleifengruppe (22,23) den gleichen Schleifendrehsinn (d,d'), wobei ihre Wendestrecken (20,21) in die gleiche Richtung, also nach links oder rechts, gebogen sind. Dabei haben die Bahnschleifen (15,16) von benachbarten und unterschiedlichen Bahnschleifengruppen (22,23) jeweils einen unterschiedlichen Schleifendrehsinn (d,d'). Dieser wechselt beim Übergang von der einen Bahnschleifengruppe (22) zur anschließenden nächsten Bahnschleifengruppe (23). Am Übergang sind dabei die Wendestrecken (20,21) an den Enden der dortigen linearen Schleifenstrecke (18,19) in entgegengesetzte Richtungen gebogen.

Die Anordnung der Bahnschleifen (15,16) innerhalb der Bahnschleifengruppen (22,23) und in der exzentrischen Spiralbahn (17) ist jeweils derart getroffen, dass die Mähbahnränder (R) von benachbarten linearen Schleifenstrecken (18,19) von Bahnschleifen (15,16) seitlich dicht aneinander stoßen. Die zueinander gekehrten Mähbahnränder (R) können auch einander seitlich überlappen. Dies kann insbesondere erreicht werden, wenn die Arbeitsbreite (A) größer als die Mähbahnbreite (B) ist.

Wie Figur 1 verdeutlicht, kann auf der Rasenmähfläche (3) bei der Bahnplanung eine weitere, bevorzugt ringförmige, geschlossene Mähbahn (14) festgelegt werden. Diese kann sich entlang und nahe an der bevorzugt umlaufenden Begrenzungskonturlinie (6) erstrecken. Sie kann insbesondere an die Begrenzungskonturlinie (6) angrenzen. Die Mähbahn (14), die auch als Randmähbahn bezeichnet wird, kann sich im vorgenannten Konturenrandbereich (9) erstrecken. Wie Figur 2 an den rund gebogenen Wendestrecken (20,21) der Bahnschleifen (15,16) verdeutlicht, können sich die Mähbahnen (12,14) an diesen Wendebereichen der Bahnschleifen (15,16) überlappen.

Eine solche weitere Mähbahn (14) kann auch bei einer anders geformten, insbesondere trapezförmigen, Rasenmähfläche (4) geplant werden. Sie kann sich hier entlang und nahe, insbesondere angrenzend, an der bevorzugt umlaufenden Begrenzungskonturlinie (7) erstrecken, die z.B. in Figur 3 dargestellt ist. Ferner kann auch gemäß Figur 4 an einem Rasenmähareal (10) und an dessen Begrenzungskonturlinie (11) eine solche weitere Mähbahn (14), insbesondere Randmähbahn, vorhanden sein.

Wenn ein Rasenmähareal (10) beispielsweise gem. Figur 3 von mehreren, z.B. virtuell eingepassten, bevorzugt rechteckigen und/oder trapezförmigen Rasenmähflächen (3,4,5) gebildet wird, kann an zumindest einer oder allen dieser Rasenmähflächen (3,4,5) eine weitere Mähbahn (14) an deren jeweiliger Begrenzungskonturlinie (6,7) vorhanden sein. Zusätzlich kann eine weitere Mähbahn (14) an der Begrenzungskonturlinie (11) des Rasenmähareals (10) vorhanden sein. Ferner ist es möglich, dass wie in Figur 4 gezeigt, nur die eine weitere Rasenmähbahn (14) an der Begrenzungskonturlinie (11) des Rasenmähareals (10) vorhanden ist. Die weitere Mähbahn (14) kann in allen diesen genannten Fällen die gleiche Mähbahnbreite (B) wie die zumindest eine erste, spiralförmige Mähbahn (12) haben.

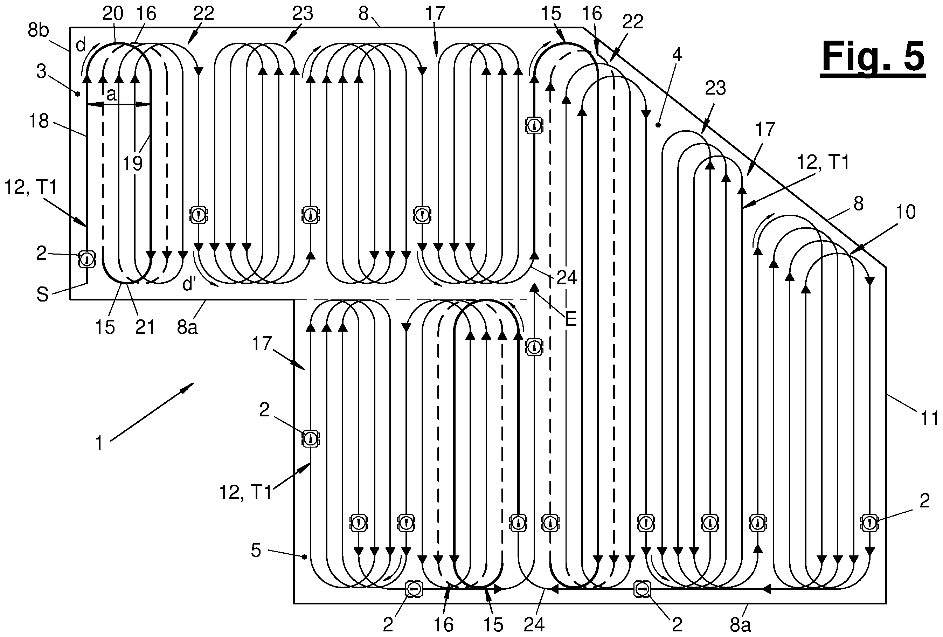

Figur 5, 6 und 7 verdeutlichen unterschiedliche Gestaltungsmöglichkeiten für die Rasenmähflächen (3,4,5) und das Rasenmähareal (10) sowie für die hier flächendeckend geplante, zumindest erste und spiralförmige Mähbahn (12).

Bei Figur 5 ist z.B. analog zu Figur 3 das Rasenmähareal (10) in zwei rechteckige Rasenmähflächen (3,5) und eine trapezförmige Rasenmähfläche (4) unterteilt. Die trapezförmige Rasenmähfläche (4) weist z.B. einen schrägen und an einem Ende abgewinkelten Konturlinienabschnitt auf.

Gemäß Figur 5 wird auf der ersten oberen Rasenmähfläche (3) eine erste Mähbahn (12) geplant. Diese ist z.B. gemäß Figur 1 als exzentrische, fortschreitende Spiralbahn (17) mit den genannten mehreren und aneinander anschließenden länglichen Bahnschleifen (15,16) gestaltet. Die Mähbahn (12) beginnt z.B. an einem Startpunkt (S), der sich z.B. in einer Ecke der Rasenmähfläche (3) befindet. Der Startpunkt (S) kann sich in oder nahe an einer Parkstelle, insbesondere einer bevorzugt elektrischen Ladestation, des automatischen Rasenmähgeräts (2) befinden.

Diese Mähbahn (12) erstreckt sich über die Länge der ersten Rasenmähfläche (3), welche am jenseitigen Ende an die trapezförmigen Rasenmähfläche (4) angrenzt. An dieser Stelle geht die Mähbahn (12) der ersten Rasenmähfläche (3) mittels einer Übergangsstrecke (24) in die erste Mähbahn (12) der zweiten Rasenmähfläche (4) über. In der rechteckigen Rasenmähfläche (3) haben die Bahnschleifen (15,16) z.B. alle die gleiche Länge. In der trapezförmigen Rasenmähfläche (4) haben die Bahnschleifen (15,16) die gezeigten unterschiedlichen Längen. Sie sind dabei wiederum in mehrere Bahnschleifengruppen (22,23) mit wechselndem Drehsinn (d,d') gegliedert.

Bei der trapezförmigen Rasenmähfläche (4) liegen der schräge Konturlinienabschnitt (8) und der in der Zeichnung horizontale Konturlinienabschnitt (8a) einander mit Abstand gegenüber, wobei zwischen ihnen die Bahnschleifen (15,16) und deren lineare Schleifenstrecken (18,19) eingepasst sind und sich erstrecken. Die in der Länge angepassten Bahnschleifen (15,16) und ihre jeweiligen und gebogenen Wendestrecken (20,21) erstrecken sich jeweils bis nahe an den betreffenden Konturlinienabschnitt (8, 8a) und bis in den dortigen Konturenrandbereich (9).

An das Ende der Mähbahn (12) in der trapezförmigen Rasenmähfläche (4) schließt sich eine weitere Übergangsstrecke (24) an, die sich z.B. entlang des unteren Konturlinienabschnitts (8) erstreckt. Die Übergangsstrecke (24) verbindet die Mähbahn (12) der trapezförmigen Mähfläche (4) mit der Mähbahn (12) in der angrenzenden zweiten rechteckigen Rasenmähfläche (5). Hier sind die Bahnschleifen (15,16) der Spiralbahn (17) wieder wie in Figur 1 ausgebildet und in Bahnschleifengruppen(22,23) gegliedert. Der Endpunkt (E) der Mähbahn (12) der zweiten rechteckigen Rasenmähfläche (5) kann im Grenzbereich zu der angrenzenden ersten rechteckigen Rasenmähfläche (3) liegen. Von dem Endpunkt (E) kann das automatische Rasenmähgerät (2) wieder zum Startpunkt (S) zurückfahren.

Bei dem in Figur 5 gezeigten Rasenmähareal (10) können die vorgenannten und nicht dargestellten weiteren, randseitigen Mähbahnen (14) vorhanden sein. Diese können in der vorgeschriebenen Weise einzeln oder mehrfach vorhanden sein.

Die zumindest ersten und spiralförmigen Mähbahnen (12) und die ein oder mehreren weiteren Mähbahnen (14) können in beliebiger Reihenfolge geplant und vom automatischen Rasenmähgerät (2) befahren werden. Beispielsweise können bei Figur 5 erst alle spiralförmigen ersten Mähbahnen (12) befahren und anschließend, z.B. von Endpunkt (E), aus die ein oder mehreren weiteren Mähbahnen (14) geplant und befahren werden. Die Reihenfolge kann auch verändert, insbesondere umgedreht werden.

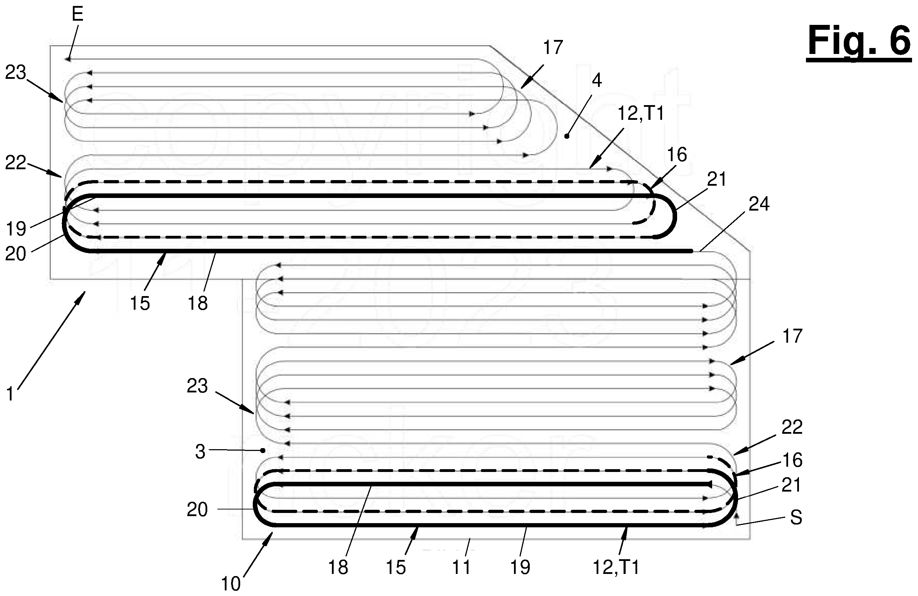

Figur 6 zeigt eine andere Variante der Bahnplanung für ein Rasenmähareal (10). Dieses kann einen gleichen oder ähnlichen Umriss wie in Figur 3 bis 5 haben. Das Rasenmähareal (10) kann dabei abweichend von Figur 5 in zwei Rasenmähflächen (3,4) unterteilt werden, wobei eine erste rechteckige Rasenmähfläche (3) liegend angeordnet ist und eine trapezförmige Rasenmähfläche (4) darüber angeordnet ist. In jeder Rasenmähfläche (3,4) kann in der vorerwähnten Weise jeweils eine Mähbahn (12) mit länglichen Bahnschleifen (15,16) und in Form der exzentrischen, fortschreitenden Spiralbahn (17) geplant werden. Die beiden Mähbahnen (12) können am Grenzbereich der aneinander grenzenden Rasenmähflächen (3,4) in der vorgeschriebenen Weise durch eine Übergangsstrecke (24) verbunden werden.

An eine Übergangsstrecke (24) kann z.B. eine letzte rundgebogene Wendestrecke (20,21) der einen ersten Mähbahn (12) an eine lineare Schleifenstrecke (18,19) am Anfang der nächst folgenden Mähbahn (12) anschließen. Außerdem ist es wie in Figur 5 möglich, dass eine Übergangsstrecke (24) eine separate weitgehend gerade Bahnstrecke bildet, welche mit entsprechend gebogenen Anschlüssen das Ende einer linearen Schleifenstrecke einer ersten Mähbahn (12) mit dem Ende einer ersten linearen Schleifenstrecke der nächstfolgenden Mähbahn (12) verbindet.

Bei der Variante von Figur 6 können der Startpunkt (S) und der Endpunkt (E) z.B. in Eckbereichen des Rasenmähareals (10) angeordnet sein.

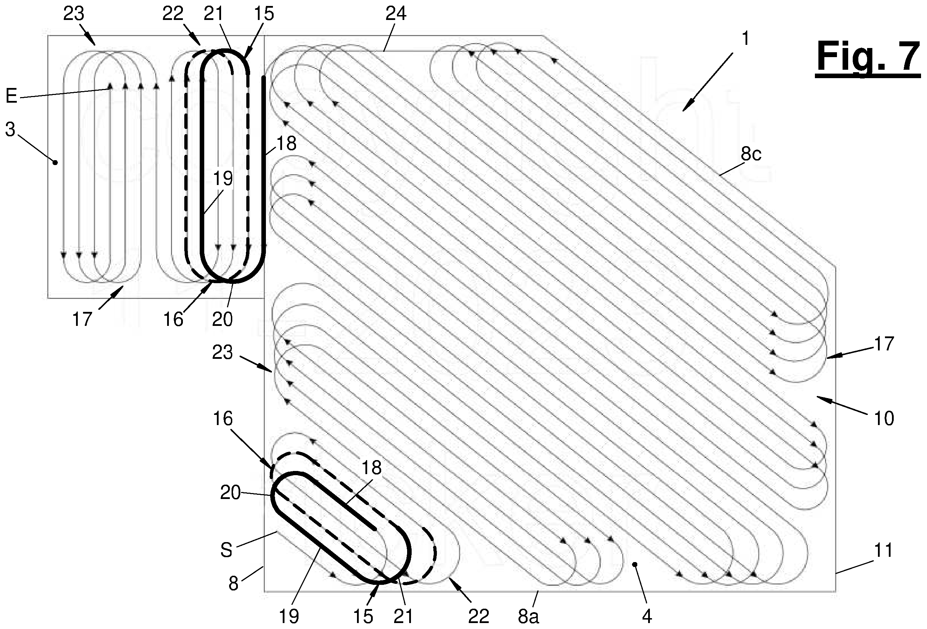

Bei der in Figur 7 gezeigten Variante ist das Rasenmähareal (10) beispielsweise in eine kleinere rechteckige Rasenmähfläche (3) und eine größere, trapezförmige Rasenmähfläche (4) unterteilt. Die trapezförmige Begrenzungskonturlinie (7) kann einen schrägen und abgewinkelten Konturlinienabschnitt (8c) aufweisen.

Bei der Variante von Figur 7 ist in den Rasenmähflächen (3,4) wieder jeweils eine erste Mähbahn (12) geplant, die mehrere gruppierte Bahnschleifen (15,16) umfasst und eine hierdurch gebildete exzentrische und fortschreitende Spiralbahn (17) bildet.

Im Unterschied zu den vorherigen Ausführungsbeispielen sind bei Figur 7 die Bahnschleifen (15,16) und Bahnschleifengruppen (22,23) in der trapezförmigen Rasenmähfläche (4) in einer Schräglage angeordnet. Die Bahnschleifen (15,16) und ihre linearen, parallelen Schleifenstrecken (18,19) erstrecken sich hierbei zwischen Konturlinienabschnitten (8,8a), die im Winkel, insbesondere rechtwinklig, zueinander verlaufen und einander schneiden. Die linearen parallelen Schleifenstrecken (18,19) erstrecken sich dabei entlang des schrägen Teils des Konturlinienabschnitte (8c).

Bei der Variante von Figur 7 gibt es ebenfalls eine Übergangsstrecke (24) zwischen den jeweils ersten Mähbahnen (12) der Rasenmähflächen (3,4). Der Startpunkt kann z.B. in einem unteren Eckbereich der trapezförmigen Rasenmähfläche (4) liegen, wobei sich der Endpunkt (E) mittig oder ebenfalls im Eck- oder Randbereich der anderen Rasenmähfläche (3) befinden kann.

Die vorbeschriebenen Gestaltungen der Figuren 5 bis 7 gelten auch, wenn das Rasenmähareal (10) als einheitliche Rasenmähfläche ausgebildet ist und nicht in mehrere Rasenmähflächen (3,4,5) unterteilt ist.

Die vorgenannte Erfassung der Begrenzungskonturlinien (6, 7,11) kann in unterschiedlicher Weise erfolgen. Zum einen ist eine Erfassung mittels einer Fahrbewegung des automatischen Rasenmähgeräts (2) entlang eines Begrenzungskabels oder einer Induktionsschleife möglich. Das Begrenzungskabel oder die Induktionsschleife werden dann entsprechend der definierten ein oder mehreren Rasenmähflächen (3,4,5) und/oder des Rasenmähareals (10) in der vorhandenen natürlichen Rasenfläche (35) verlegt. Andererseits ist es möglich, die Begrenzungskonturlinien (6,7,11) anhand eines GPS-basierten Systems, z.B. eines RTK- oder DGPS-Systems zu erfassen. Dies kann kamera- und bildbearbeitungsbasiert oder sensorbasiert, insbesondere LiDAR- oder ultraschallsensorbasiert und/oder kartenbasiert erfolgen. Hierbei ist eine virtuelle Erfassung der Begrenzungskonturlinien (6,7,11) möglich. Dies kann z.B. anhand einer zuvor ermittelten (Land-)Karte der vorhandenen natürlichen Rasenfläche (35) geschehen. Es ist außerdem möglich, die Randgrenzen der natürlichen vorhandenen Rasenfläche (35) in geeigneter Weise zu erfassen und hiervon ausgehend die Begrenzungskonturlinien (6,7,11) zu definieren, z.B. in einer erstellten Karte der natürlichen vorhandenen Rasenfläche (35). Ferner ist eine Kombination der vorgenannten Erfassungsmöglichkeiten machbar.

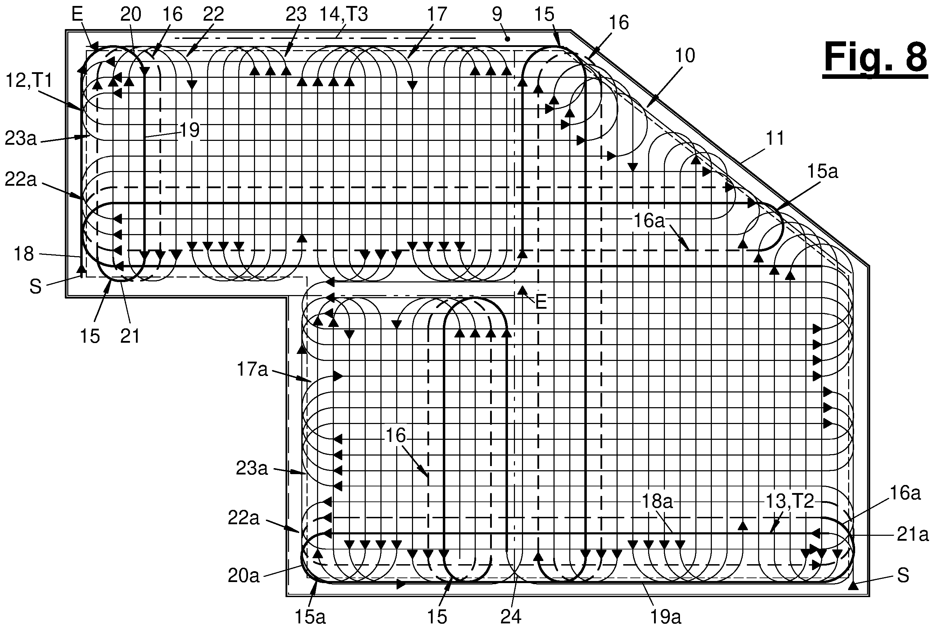

Figur 8 verdeutlicht eine weitere Möglichkeit der Bahnplanung. Hierbei wird in der vorgeschriebenen Weise jeweils zumindest eine erste Mähbahn (12) in einer oder mehreren Rasenmähflächen (3,4,5) und/oder in einem Rasenmähareal (10) geplant. Zudem kann in der vorbeschriebenen Weise auch zumindest eine weitere Mähbahn (14) geplant werden.

Figur 8 verdeutlicht, dass zusätzlich eine zweite Mähbahn (13) auf der oder den Rasenmähflächen (3,4,5) und/oder dem Rasenmähareal (10) geplant werden kann und die betreffenden Fläche(n) abdeckt. Diese zweite Mähbahn (13) kann ebenfalls spiralförmig ausgebildet sein. Dies kann analog zur vorgeschriebenen Planung und Ausbildung der ersten Mähbahn (12) erfolgen. Die zweite Mähbahn (13) kann mehrere länglich fortschreitend aneinander anschließende Bahnschleifen (15a, 16a) und eine hiervon gebildete exzentrische und fortschreitende Spiralbahn (17a) bilden. Die Bahnschleifen (15a, 16a) können in der vorbeschriebenen Weise parallele lineare Schleifenstrecken (18a,19a) sowie an deren jeweiligen Enden rundgebogene Wendestrecken (20a, 21a) aufweisen. Ferner können Bahnschleifengruppen (22a, 23a) vorhanden sein.

Die Zuordnung der ersten und zweiten Mähbahn (12,13) erfolgt derart, dass sich die länglichen Bahnschleifen (15a, 16a) der zweiten Mähbahn quer zu den Bahnschleifen (15,16) der ersten Mähbahn (12) erstrecken und diese schneiden. Die Erstreckung der länglichen Bahnschleifen (15a, 16a) der zweiten Mähbahn (13) kann senkrecht oder schräg zu den Bahnschleifen (15,16) der ersten Mähbahn (12) erfolgen. Hierbei sind Zuordnungswinkel und Schnittwinkel zwischen 1° und 90° möglich. Diese Winkel und die besagten Erstreckungen ergeben sich auch zwischen den parallelen linearen Schleifenstrecken (18a,19a) der zweiten Mähbahn (13) und den Schleifenstrecken (18,19) der ersten Mähbahn (12). Zudem kann zumindest eine weitere Mähbahn (14), insbesondere Randmähbahn, vorhanden sein.

Die in Figur 8 gezeigte Anordnung und gegenseitige Zuordnung der beiden Mähbahnen (12,13) kann sich z.B. aus einer Kombination der in Figuren 5 und 6 gezeigten Mähbahnen (12) ergeben, wobei z.B. die in Figur 6 gezeigte Mähbahn (12) bei der Kombination die in Figur 8 gezeigte zweite Mähbahn (13) bildet.

In den gezeigten Ausführungsformen von Figur 1 bis 8 verlaufen die Schleifenstrecken (18,19,18a,19a) von Bahnschleifen (15,16, 15a, 16a) einer Mähbahn (12,13) jeweils durchgehend linear. Dies ist ein Idealfall. Wie Figur 9 verdeutlicht, können die Schleifenstrecken (18,19, 18a, 19a) nur bereichsweise linear verlaufen und zwar mit Ausnahme einer Umfahrung von erfassten Hindernissen (33) mittels eines gebogenen Streckenbereichs. Der gebogene Streckenbereich beginnt mit hinreichendem Abstand vor dem Hindernis (33), umgibt es seitlich mit ausreichendem Abstand und wird anschließend wieder auf die betreffende Schleifenstrecken (18,19,18a, 19a) zurückgeführt. Die Erfassung und Umfahrung von solchen Hindernissen (33) kann mit der Navigationseinheit (28) erfolgen. Die unterbrochenen Bereiche der linearen Schleifenstrecken (18,19,18a,19a) sind in Figur 9 gestrichelt dargestellt.

Das vorgenannte Steuerungsverfahren dient zur Steuerung einer Fahrbewegung des automatischen, selbstfahrenden, selbstlenkenden und ggf. selbstnavigierenden Rasenmähgeräts (2), insbesondere Mähroboters, entlang zumindest einer Mähbahn (12,13,14), welche innerhalb einer begrenzten Rasenmähfläche (3,4,5) und/oder eines Rasenmähareals (10) verläuft. Hierbei wird die Planung der zumindest einen Mähbahn (12,13,14) mit dem zuvor beschriebenen Bahnplanungsverfahren durchgeführt. Die gesteuerte Fahrbewegung des Rasenmähgeräts (2) wird dann gesteuert entlang zumindest einer Mähbahn (12,13, 14) durchgeführt.

Das Steuerungsverfahren sieht hierfür vor, dass zum einen Steuerungsdaten für die Fahrbewegung des automatischen Rasenmähgeräts (2) entlang zumindest einer Mähbahn (12,13,14) abgeleitet werden, und zwar in Form einer die zumindest eine Mähbahn (12,13,14) beschreibenden, bevorzugt mittigen, Trajektorie (T1,T2,T3). Ferner werden die Steuerungsdaten in eine Steuereinheit (26) des Rasenmähgeräts (2) ausgegeben und schließlich die Fahrbewegung des Rasenmähgeräts (2) auf Basis der Steuerungsdaten durchgeführt. Die Steuereinheit (26) kann in der vorbeschriebenen Weise vollständig oder teilweise am automatischen Rasenmähgerät (2) implementiert oder vollständig oder in Teilen extern und getrennt vom automatischen Rasenmähgerät (2) angeordnet sein. Im zweitgenannten Fall kann die besagte bevorzugt drahtlose Kommunikation mittels der Kommunikationseinrichtung (32) stattfinden.

Im Fall von mehreren Mähbahnen (12,13,14) werden die Fahrbewegung des automatischen Rasenmähgeräts (2) entlang der mehreren Mähbahnen (12,13,14) und ihrer jeweils zugehörigen und bevorzugt mittigen Trajektorien (T1,T2,T3) auf Basis der jeweils zugehörigen Steuerungsdaten nacheinander durchgeführt. Die Reihenfolge ist dabei wählbar. Das automatische Rasenmähgerät (2) wird entlang der zumindest einen Trajektorie (T1,T2,T3) durchgängig in der gleichen Fahrtrichtung (F), insbesondere in Vorwärtsfahrt, bewegt.

Bei dem Steuerungsverfahren können mit der Steuereinheit (26) etwaige Abweichungen von der zumindest einen geplanten Mähbahn (12,13,14) und/oder der zugeordneten Trajektorie (T1,T2,T3) detektiert werden. Anhand des Detektionsergebnisses kann eine entsprechende Korrektur des Fahrtwegs des automatischen Rasenmähgerät (2) erfolgen. Mit einer Navigationseinheit kann ein insbesondere temporäres Hindernis (33) auf zumindest einer Mähbahn (12,13,14) detektiert werden, wobei anhand des Detektionsergebnisses eine entsprechende Korrektur des Fahrwegs des automatischen Rasenmähgeräts (2) durchgeführt werden kann. Bekannte Hindernisse können bei der Bahnplanung bereits berücksichtigt und umfahren werden. Man kann auch Rasenmähflächen derart definieren, dass Hindernisse im Grenzbereich benachbarter Rasenmähflächen liegen und durch entsprechende Begrenzungskonturlinien ausgespart werden können.

Das Steuerungsverfahren kann in der vorgenannten Weise ebenfalls mit einer Datenverarbeitungseinrichtung (25) ausgeführt werden.

Mit dem Steuerungsverfahren wird das automatische Rasenmähgerät (2), insbesondere dessen Rasenmähwerkzeug (32) dazu gesteuert, einen Rasenmähprozess, insbesondere einen Mähprozess, während der Bewegung des Rasenmähgeräts (2) entlang der zumindest einen Trajektorie (T1,T2,T3) auszuführen.

Das eingangs genannte Rasenmähverfahren dient zur Durchführung eines Rasenmähprozesses, insbesondere eines Mähprozesses, während einer gesteuerten Fahrbewegung des automatischen, selbstfahrenden, selbstlenkenden und gegebenenfalls selbstnavigieren Rasenmähgeräts (2), insbesondere Mähroboters, entlang zumindest einer Mähbahn (12,13,14), die innerhalb einer begrenzten Rasenmähfläche (3,4,5) und/oder eines begrenzten Rasenmähareals (10) verläuft. Die Steuerung des Rasenmähgeräts (2) kann dabei mit dem vorgenannten Steuerungsverfahren erfolgen. Bei dem Rasenmähverfahren kann das steuerbare Rasenmähwerkzeug (32) während der Fahrbewegung des automatischen Rasenmähgeräts (2) entlang der besagten Schleifenstrecken (18,19) und auch entlang der besagten rundgebogenen Wendestrecken (20,21,20a,21a) von zumindest einer Mähbahn (12,13) in Mähfunktion gehalten werden. Das steuerbare Rasenmähwerkzeug (32) muss während der Fahrbewegung entlang der ein oder mehreren Mähbahnen (12,13,14) nicht abgeschaltet werden.

Das eingangs genannte Rasenmähsystem (1) umfasst das vorbeschriebene automatische, selbstfahrende, selbstlenkende ggf. selbstnavigierende sowie fahrerlose und autonomeRasenmähgerät (2), insbesondere einen Mähroboter. Es kann ferner eine vorgenannte Erfassungseinheit (29) für eine Begrenzungskonturlinie (6,7,11) und eine Datenverarbeitungseinrichtung (25) für das selbstfahrende Rasenmähgerät (2), insbesondere in Form einer Auswerte- und Recheneinheit (27) und ggf. einer Steuereinheit (26), umfassen. Die Datenverarbeitungseinrichtung (25) ist dazu ausgelegt, das vorgenannte Bahnplanungsverfahren und/oder das genannte Steuerungsverfahren und/oder das Rasenmähverfahren auszuführen und Steuerungsdaten an die Steuereinheit (26) zur Steuerung der Fahrbewegung des automatischen Rasenmähgeräts (2) auszugeben.

Das Rasenmähsystem (1) kann gemäß Figur 10 auch eine bevorzugt mobile Fernbedieneinheit (34) umfassen. Dies kann eine spezielle und adaptierte Fernbedieneinheit (34) sein. Das Rasenmähsystem (1) kann auch ein Bedienprogramm für eine bevorzugt mobile Fernbedienungseinheit (34) umfassen, wobei das Bedienprogramm das vorgenannte Softwareprodukt umfassen kann, welches auf einem Datenträger gespeichert ist oder durch eine Datenschnittstelle kommuniziert wird und die vorgeschriebenen Anweisungen enthält. Die bevorzugt mobile Fernbedieneinheit (34) kann auch als universelles Telekommunikationsgerät, insbesondere Smartphone, Tablet oder Laptop, ausgebildet sein und das vorgenannte Softwareprodukt umfassen.

Die bevorzugt mobile Fernbedieneinheit kommuniziert bevorzugt drahtlos und insbesondere direktional mittels der besagten Kommunikationseinrichtung (32) mit dem Rasenmähgerät (2) und ggf. mit der Erfassungseinheit (29). Durch die bidirektionale Kommunikation kann die Fernbedienungseinheit (34) Signale, z.B. Programmbefehle und Steuerbefehle, an das Rasenmähgerät (2) senden und von diesem Signale, insbesondere Zustandsmeldungen, Quittungssignale etc., empfangen. Bei einer Kommunikation mit einer Erfassungseinheit (29) können Signale, insbesondere Erfassungsdaten, und Befehle ausgetauscht werden.

Die bevorzugt mobile Fernbedieneinheit kann als bevorzugt elektronische Datenverarbeitungseinrichtung (25) ausgebildet sein oder kann eine solche Datenverarbeitungseinrichtung (25) enthalten. Die bevorzugt mobile Fernbedieneinheit (34) kann für die Datenverarbeitung ein oder mehrere Prozessoren und Speicher für Daten und Programme umfassen.

Figur 3 verdeutlicht schematisch eine vom automatischen Rasenmähgerät (2) getrennte und externe Erfassungseinheit (29). Diese kann z.B. als stationäres GPS-System der vorgenannten Art ausgebildet sein. Es kann ebenfalls eine bevorzugt drahtlose Kommunikationseinheit (32) beinhalten.

Abwandlungen der gezeigten und beschriebenen Ausführungsbeispiele sind in verschiedener Weise möglich. Insbesondere können die vorbeschriebenen Ausführungsbeispiele miteinander im Rahmen der Ansprüche kombiniert werden.

### Bezugszeichen

- 1: Rasenmähsystem
- 2: Rasenmähgerät
- 3: Rasenmähfläche, rechteckig
- 4: Rasenmähfläche, trapezförmig
- 5: Rasenmähfläche, rechteckig
- 6: Begrenzungskonturlinie, rechteckig
- 7: Begrenzungskonturlinie, trapezförmig
- 8: Konturlinieabschnitt
- 8a: Konturlinieabschnitt
- 8b: Konturlinieabschnitt
- 8c: Konturlinieabschnitt
- 9: Konturenrandbereich
- 10: Rasenmähareal
- 11: Begrenzungskonturlinie
- 12: Mähbahn
- 13: Mähbahn
- 14: Randmähbahn
- 15: Bahnschleife
- 15a: Bahnschleife
- 16: Bahnschleife
- 16a: Bahnschleife
- 17: Spiralbahn
- 17a: Spiralbahn
- 18: Schleifenstrecke
- 18a: Schleifenstrecke
- 19: Schleifenstrecke
- 19a: Schleifenstrecke
- 20: Wendestrecke
- 20a: Wendestrecke
- 21: Wendestrecke
- 21a: Wendestrecke
- 22: Bahnschleifengruppe
- 22a: Bahnschleifengruppe
- 23: Bahnschleifengruppe
- 23a: Bahnschleifengruppe
- 24: Übergangsstrecke
- 25: Datenverarbeitungseinrichtung
- 26: Steuereinheit
- 27: Auswerte- und Recheneinheit
- 28: Navigationseinheit
- 29: Erfassungseinheit
- 30: Antriebs- und Lenkeinheit
- 31: Rasenmähwerkzeug
- 32: Kommunikationseinrichtung
- 33: Hindernis
- 34: Fernbedieneinheit
- 35: Rasenfläche
- 36: Chassis
- 37: Fördermittel, vorn
- 38: Fördermittel, hinten
- a: Querabstand
- d: Schleifendrehsinn
- d': Schleifendrehsinn
- F: Fahrtrichtung
- R: Mähbahnrand
- T1: Trajektorie
- T2: Trajektorie
- T3: Trajektorie
- A: Arbeitsbreite
- B: Mähbahnbreite
- W: Weite der rundgebogenen Wendestrecke

## Patentansprüche

1. Bahnplanungsverfahren für die Planung von zumindest einer Mähbahn (12,13,14) eines automatischen, selbstfahrenden und selbstlenkenden sowie ggf. selbstnavigierenden Rasenmähgeräts (2), insbesondere eines Mähroboters, die bei einem Rasenmähprozess, insbesondere Mähprozess, abzufahren ist, wobei die Mähbahn (12,13,14) innerhalb einer begrenzten Rasenmähfläche (3,4,5) verläuft, wobei das Bahnplanungsverfahren als ein computerimplementiertes Verfahren ausführbar ist oder ausgeführt wird und die folgenden Schritte umfasst:
- Erfassen von zumindest einer bevorzugt umlaufenden Begrenzungskonturlinie(n) (6,7,11) der Rasenmähfläche (3,4,5),
- Erfassen einer Arbeitsbreite (A) des Rasenmähgeräts (2) und Definieren der Mähbahnbreite (B) anhand der Arbeitsbreite (A),
- Festlegen wenigstens einer die Rasenmähfläche (3,4,5) abdeckenden ersten Mähbahn (12) umfassend mehrere bevorzugt längliche Bahnschleifen (15,16), die unter Bildung einer exzentrischen, fortschreitenden Spiralbahn (17) jeweils aneinander anschließen, wobei die Bahnschleifen (15,16) jeweils umfassen,
- zwei parallele, lineare Schleifenstrecken (18,19), die sich zwischen einander gegenüberliegenden Konturlinienabschnitten (8,8a) der Begrenzungskonturlinie(n) (6,7,11) erstrecken
- und an den Enden der Schleifenstrecken (18,19) jeweils eine quer zu den Schleifenstrecken (18,19) verlaufende und rundgebogene Wendestrecke (20,21), wobei die parallelen Schleifenstrecken (18,19) der Bahnschleifen (15,16) jeweils einen Querabstand (a) voneinander aufweisen, der dem mehrfachen, insbesondere dreifachen oder vierfachen, der Mähbahnbreite (B) entspricht.

2. Bahnplanungsverfahren nach Anspruch 1, **dadurch gekennzeichnet, dass** eine zweite Mähbahn (13) des automatischen Rasenmähgeräts (2) mit bevorzugt länglichen Bahnschleifen (15a,16a) auf der Rasenmähfläche (3,4,5) festgelegt wird, welche sich quer zu den Bahnschleifen (15,16) der ersten Mähbahn (12) erstrecken, wobei die Bahnschleifen (15a, 16a) der zweiten Mähbahn (13) unter Bildung einer exzentrischen, fortschreitenden Spiralbahn (17a) jeweils aneinander anschließen, wobei die Bahnschleifen (15a, 16a) der zweiten Mähbahn (13) jeweils umfassen,
- zwei parallele, lineare Schleifenstrecken (18a, 19a), die sich zwischen weiteren einander gegenüberliegenden Konturlinienabschnitten (8b,8c) der Begrenzungskonturlinie(n) (6,7,11) erstrecken
- und an den Enden der Schleifenstrecken (18a,19a) jeweils eine quer zu den Schleifenstrecken (18a,19a) verlaufende und rundgebogene Wendestrecke (20a,21a),
wobei die parallelen Schleifenstrecken (18a,19a) der Bahnschleifen (15a, 16b) jeweils einen Querabstand (a) voneinander aufweisen, der dem mehrfachen, insbesondere dreifachen oder vierfachen, der Mähbahnbreite (B) entspricht.

3. Bahnplanungsverfahren nach Anspruch 1 oder 2, **dadurch gekennzeichnet, dass** eine weitere bevorzugt ringförmige, geschlossene Mähbahn (14) festgelegt wird, welche sich entlang und nahe, insbesondere angrenzend, an der bevorzugt umlaufenden Begrenzungskonturlinie(n) (6,7,11) der Rasenmähfläche (3,4,5) erstreckt.

4. Bahnplanungsverfahren nach Anspruch 1, 2 oder 3, **dadurch gekennzeichnet, dass** ein Rasenmähwerkzeug (31) des automatischen Rasenmähgeräts (2) während der gesamten Fahrt entlang der ein oder mehreren Mähbahnen (12,13,14) in Funktion und angeschaltet bleibt.

5. Bahnplanungsverfahren nach einem der vorhergehenden Ansprüche, **dadurch gekennzeichnet, dass** die Bahnschleifen (15,16,15a,16a) einer Mähbahn (12,13) jeweils in eine oder mehrere Bahnschleifengruppen (22,23,22a,23a) gegliedert sind, die Bahnschleifen (15,16, 15a, 16a) innerhalb einer Bahnschleifengruppe (22,23,22a,23a) einer Mähbahn (12,13) jeweils den gleichen Schleifendrehsinn (d) haben und/oder wobei bevorzugt die Bahnschleifen (15,16,15a,16a) von benachbarten Bahnschleifengruppen (22,23,22a,23a) einer Mähbahn (12,13) jeweils einen unterschiedlichen Schleifendrehsinn (d,d') haben, welcher beim Übergang von einer Bahnschleifengruppe (22,22a) zur anschließenden nächsten Bahnschleifengruppe (23,23a) einer Mähbahn (12,13) jeweils wechselt.

6. Bahnplanungsverfahren nach einem der vorhergehenden Ansprüche, **dadurch gekennzeichnet, dass** die linearen Schleifenstrecken (18,19, 18a, 19a) von Bahnschleifen (15,16, 15a, 16a) einer Mähbahn (12,13) jeweils entlang, insbesondere parallel, zu einem anderen Konturlinieabschnitt (8b,8c,8,8a) der Begrenzungskonturlinie(n) (6,7,11) ausgerichtet werden, welcher insbesondere die der Mähbahn (12,13) zugeordneten einander gegenüberliegenden Konturlinienabschnitte (8,8a,8b,8c) verbindet, wobei bevorzugt die Schleifenstrecken (18,19, 18a, 19a) von Bahnschleifen (15,16, 15a, 16a) einer Mähbahn (12,13) jeweils durchgehend linear oder zumindest bereichsweise linear, insbesondere mit Ausnahme einer Umfahrung von erfassten Hindernissen (33), verlaufen.

7. Bahnplanungsverfahren nach einem der vorhergehenden Ansprüche, **dadurch gekennzeichnet, dass** die Mähbahnbreite (B) in gleicher Größe oder kleiner als die Arbeitsbreite (A) des Rasenmähgeräts (2) definiert wird, wobei bevorzugt die Mähbahnränder (R) von benachbarten linearen Schleifenstrecken (18,19,18a,19a) von Bahnschleifen (15,16,15a,16a) einer Mähbahn (12,13) jeweils seitlich dicht aneinander stoßen und/oder einander seitlich überlappen.

8. Bahnplanungsverfahren nach einem der vorhergehenden Ansprüche, **dadurch gekennzeichnet, dass** ein Rasenmähareal (10), mehrere Rasenmähflächen (3,4,5) aufweist, insbesondere in mehrere Rasenmähflächen (3,4,5) virtuell unterteilt ist, wobei die zumindest eine Mähbahn (13,13,14) in den Rasenmähflächen (3,4,5) jeweils mit zumindest einer Mähbahn (13,13,14) in der nächsten Rasenmähfläche (3,4,5) durch eine Übergangsstrecke (24) verbunden wird, wobei bevorzugt zumindest eine bevorzugt umlaufende Begrenzungskonturlinie (11) des Rasenmähareals (10) erfasst und zumindest eine weitere bevorzugt ringförmige, geschlossene Mähbahn (14a) festgelegt wird, welche sich entlang und nahe, insbesondere angrenzend, an der bevorzugt umlaufenden Begrenzungskonturlinie(n) (11) des Rasenmähareals (10) erstreckt.

9. Steuerungsverfahren zur Steuerung einer Fahrbewegung eines automatischen, selbstfahrenden, selbstlenkenden und ggf. selbstnavigierenden Rasenmähgeräts (2), insbesondere eines Mähroboters, entlang zumindest einer Mähbahn (12,13,14), die innerhalb einer begrenzten Rasenmähfläche (3,4,5) und/oder eines Rasenmähareals (10) verläuft, **dadurch gekennzeichnet, dass** die Planung der zumindest einen Mähbahn (12,13,14) mit einem Bahnplanungsverfahren gemäß einem der Ansprüche 1 bis 8 durchgeführt wird und dass die gesteuerte Fahrbewegung des Rasenmähgeräts (2) entlang zumindest einer Mähbahn (12,13,14) durchgeführt wird, wobei bevorzugt das Steuerungsverfahren folgende Schritte umfasst:
- Ableiten von Steuerungsdaten für die Fahrbewegung des automatischen Rasenmähgeräts (2) entlang zumindest einer Mähbahn (12,13,14) in Form einer die zumindest eine Mähbahn (12,13,14) beschreibenden Trajektorie (T1,T2,T3),
- Ausgeben der Steuerungsdaten in eine Steuereinheit (26) des Rasenmähgeräts (2), und
- Durchführen der Fahrbewegung des Rasenmähgeräts (2) auf Basis der Steuerungsdaten,
wobei bevorzugt mit einer Navigationseinheit (28) ein insbesondere temporäres Hindernis (33) detektiert und anhand des Detektionsergebnisses eine entsprechende Korrektur des Fahrwegs des automatischen Rasenmähgeräts (2) durchgeführt wird.

10. Steuerungsverfahren nach Anspruch 9, **dadurch gekennzeichnet, dass** das automatische Rasenmähgerät (2), insbesondere dessen Rasenmähwerkzeug (32), gesteuert wird, während der Bewegung des Rasenmähgeräts (2) entlang der zumindest einen Trajektorie (T1,T2,T3) einen Rasenmähprozess, auszuführen.

11. Rasenmähverfahren zur Durchführung eines Rasenmähprozess, insbesondere eines Mähprozesses, während einer gesteuerten Fahrbewegung eines automatischen, selbstfahrenden, selbstlenkenden und ggf. selbstnavigierenden Rasenmähgeräts (2), insbesondere eines Mähroboters, entlang zumindest einer Mähbahn (12,13,14) die innerhalb einer begrenzten Rasenmähfläche (3,4,5) verläuft, **dadurch gekennzeichnet, dass** die Steuerung des Rasenmähgeräts (2) nach Anspruch 9 oder 10 erfolgt wobei bevorzugt ein steuerbares Rasenmähwerkzeug (31) während der Fahrbewegung des automatischen Rasenmähgeräts (2) entlang der Schleifenstrecken (18,19, 18a, 19a) und auch entlang der Wendestrecken (20,21,20a,21a) zumindest einer Mähbahn (12,13) in Mähfunktion ist.

12. Rasenmähsystem, umfassend ein automatisches selbstfahrendes, selbstlenkendes und ggf. selbstnavigierendes Rasenmähgerät (2), insbesondere einen Mähroboter, eine Erfassungseinheit (29) für eine Begrenzungskonturlinie (6,7,11) einer Rasenmähfläche (3,4,5), und/oder eines Rasenmähareals (10), eine Datenverarbeitungseinrichtung (25) für das selbstfahrende Rasenmähgerät (2), insbesondere eine Auswerte- und Recheneinheit (27) und eine Steuereinheit (26), wobei die Datenverarbeitungseinrichtung (25) dazu ausgelegt ist, das Bahnplanungsverfahren nach einem der Ansprüche 1 bis 8 und/oder ein Steuerungsverfahren nach einem der Ansprüche 9 oder 10 auszuführen und die Steuerungsdaten an die Steuereinheit (26) zur Steuerung der Fahrbewegung des automatischen Rasenmähgeräts (2) auszugeben, wobei bevorzugt das Rasenmähsystem (1) eine Navigationseinheit (28) für das automatische Rasenmähgerät (2) umfasst.

13. Rasenmähsystem nach Anspruch 12, **dadurch gekennzeichnet, dass** die Erfassungseinheit (29), die Auswerte- und Recheneinheit (27), die Steuereinheit (26) und/oder die Navigationsheit (28) als dezentrale mit dem Rasenmähgerät (2) über eine drahtlose Einheit oder Einheiten ausgebildet oder in dem automatischen Rasenmähgerät (2) implementiert vorgesehen sind und/oder wobei bevorzugt das Rasenmähsystem (1) eine bevorzugt mobile Fernbedieneinheit (34) und/oder ein Bedienprogramm für eine bevorzugt mobile Fernbedieneinheit (34) umfasst, die mittels einer bevorzugt drahtlosen Kommunikationseinrichtung (32) mit dem Rasenmähgerät (2) und ggf. der Erfassungseinheit (29) bevorzugt bidirektional kommunizieren kann/können.

14. Automatisches, selbstfahrendes und selbstlenkendes sowie ggf. selbstnavigierendes Rasenmähgerät (2), insbesondere Mähroboter, **dadurch gekennzeichnet, dass** das Rasenmähgerät (2) mit einem computerimplementierten Steuerverfahren nach einem der Ansprüche 9 oder 10 steuerbar ist und wenigstens umfasst eine steuerbare Antriebs- und Lenkeinheit (30) und eine Steuereinheit (26), wobei die Steuereinheit (26) dazu ausgelegt ist, mit dem computerimplementierten Steuerungsverfahren generierte Steuerungsdaten zu empfangen und die Antriebs- und Lenkeinheit (30) für eine Fahrbewegung des Rasenmähgeräts (2) anhand der Steuerungsdaten zu steuern, wobei bevorzugt das Rasenmähgerät (2) ein bevorzugt steuerbar angetriebenes Rasenmähwerkzeug (31), insbesondere ein Mähwerkzeug, umfasst und/oder wobei bevorzugt das Rasenmähgerät (2) eine Navigationseinheit (28) umfasst und/oder wobei bevorzugt das Rasenmähgerät (2) eine Erfassungseinheit (29) umfasst und/oder wobei bevorzugt das Rasenmähgerät (2) eine bevorzugt drahtlose Kommunikationseinrichtung (32) umfasst und/oder wobei bevorzugt das Rasenmähgerät (2) von der Antriebs- und Lenkeinheit (30) angetriebene linke und rechte Fördermittel (37,38), insbesondere angetriebene Räder, umfasst, wobei ein Lenken und eine Kurvenfahrt z.B. durch unterschiedliche Geschwindigkeiten und ggf. auch unterschiedliche Bewegungsrichtungen der angetriebenen linken und rechten Fördermittel (37,38) erfolgen.

15. Softwareprodukt, gespeichert auf einem Datenträger oder kommuniziert durch eine Datenschnittstelle, wobei das Softwareprodukt Anweisungen enthält, die bei Ausführung auf einer Datenverarbeitungseinrichtung (25) ein Bahnplanungsverfahren nach einem der Ansprüche 1 bis 8 und/oder ein Steuerungsverfahren nach einem der Ansprüche 9 oder 10 und/oder ein Rasenmähverfahren nach Anspruch 11 implementieren, wobei die Datenverarbeitungseinrichtung (25) insbesondere eine Datenverarbeitungseinrichtung eines automatischen, selbstfahrenden und selbstlenkenden sowie ggf. selbstnavigierenden Rasenmähgeräts (2) ist, weiter insbesondere eine Auswerte- und Recheneinheit (27) und/oder eine Steuerungseinheit (26) des Rasenmähgeräts (2) und/oder eine Datenverarbeitungseinrichtung einer bevorzugt mobilen Fernbedieneinheit (34) ist.
